(19) **Europäisches Patentamt European Patent Office Office européen des brevets**

(11) **EP 4 738 868 A1**

(12) # EUROPEAN PATENT APPLICATION

(43) Date of publication:
06.05.2026 Bulletin 2026/19

(21) Application number: 25211649.6

(22) Date of filing: 28.10.2025

(51) International Patent Classification (IPC):
*H04N 23/95* (2023.01)　　*H04N 25/705* (2023.01)
*G02B 5/18* (2006.01)　　*G02B 27/42* (2006.01)

(52) Cooperative Patent Classification (CPC):
H04N 23/95; G02B 5/18; G02B 27/42; H04N 23/55;
H04N 25/705

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **30.10.2024 US 202463713786 P**

(71) Applicant: **Airy3d Inc.**
**Montreal, Québec H2T 3B2 (CA)**

(72) Inventors:
• **FAVRON, Alexandre**
**Montreal, H2T 3B2 (CA)**
• **FAGHIHI, Niloufar**
**Montreal, H2T 3B2 (CA)**
• **GREGOIRE, Pascal**
**Montreal, H2T 3B2 (CA)**
• **SUMMY, Simon**
**Montreal, H2T 3B2 (CA)**

(74) Representative: **Lavoix**
**Bayerstraße 83**
**80335 München (DE)**

(54) **DIFFRACTION-GRATING-BASED DEPTH IMAGING SYSTEMS AND METHODS WITH PIXEL CROSSTALK MITIGATION**

(57)　Diffraction-grating-based depth imaging systems and methods for pixel crosstalk mitigation are disclosed. The system includes a transmissive diffraction mask (TDM) and an underlying image sensor. The TDM receives light from a scene and generates diffracted light encoding angle-of-incidence information, which is detected by the image sensor comprising a plurality of pixels. The TDM has a grating structure that spatially maps the diffracted light onto distinct pixel groups, including bright-positive pixels that receive a portion of the diffracted light and exhibit a pixel response that increases with angle of incidence, bright-negative pixels that receive another portion of the diffracted light and exhibit a pixel response that decreases with angle of incidence, and dark pixels that receive substantially no diffracted light. The dark pixels are interspersed among the bright-positive and bright-negative pixels to mitigate pixel crosstalk, enhancing the accuracy and contrast of depth measurements.

FIG. 8

EP 4 738 868 A1

## Description

### TECHNICAL FIELD

The present disclosure relates to imaging technology, specifically focusing on techniques for reducing pixel-to-pixel crosstalk in depth imaging systems.

### BACKGROUND

Pixel-to-pixel crosstalk is a well-documented issue in image sensors that utilize arrays of photosensitive pixels, including complementary metal-oxide-semiconductor (CMOS) and charge-coupled device (CCD) architectures. Crosstalk occurs when light intended for a specific pixel is not fully absorbed by the pixel and leaks into neighboring pixels, resulting in unwanted signals and a degradation of image quality. Several factors can influence the extent of crosstalk, including pixel size, design, material composition, and the wavelength of incoming light. Crosstalk tends to increase with longer wavelengths, such as infrared light, due to their greater penetration depth in semiconductor materials like silicon. Mitigating pixel-to-pixel crosstalk in various imaging applications remains an ongoing challenge.

### SUMMARY

The present disclosure pertains to techniques for reducing pixel-to-pixel crosstalk in diffraction-grating-based depth imaging systems. These systems incorporate a diffraction grating, referred to herein as a "transmissive diffraction mask" (TDM), placed in front of an image sensor to create pixels with angle-sensitive responses. Utilizing near-field diffraction effects, specifically the Talbot effect, the TDM encodes directional information into the light intensity distribution received from a scene, which is then transmitted as diffracted light to the image sensor beneath it. Consequently, the pixels can measure both the intensity and the angle of incoming light, allowing for the determination of depth information about the scene. However, crosstalk in these systems can distort the angular response of the pixels, thereby reducing the accuracy of depth measurements, particularly with longer wavelengths such as infrared.

In accordance with an aspect, there is provided a depth imaging system, comprising:

a transmissive diffraction mask (TDM) configured to receive light from a scene and generate diffracted light encoding angle-of-incidence information; and

an image sensor positioned to detect the diffracted light generated by the TDM and comprising a plurality of pixels, wherein the TDM has a grating structure configured to spatially map the diffracted light onto distinct pixel groups of the plurality of pixels, the distinct pixel groups comprising: (i) bright-positive pixels that receive a portion of the diffracted light from the TDM and exhibit a pixel response that increases with increasing angle of incidence; (ii) bright-negative pixels that receive another portion of the diffracted light from the TDM and exhibit a pixel response that decreases with increasing angle of incidence; and (iii) dark pixels that receive substantially no diffracted light from the TDM and exhibit substantially no pixel response, the dark pixels being interspersed among the bright-positive pixels and the bright-negative pixels to reduce pixel crosstalk within the image sensor.

In some embodiments of the depth imaging system, the depth imaging system further comprises a computer device operatively coupled to the image sensor and configured to determine depth information about the scene based on differences between the pixel responses of the bright-positive and bright-negative pixels.

In some embodiments of the depth imaging system, the grating structure of the TDM is configured to partition the plurality of pixels according to a design rule specifying an overall pixel group distribution of 25% bright-positive pixels, 25% bright-negative pixels, and 50% dark pixels. In some instances, the design rule for the overall pixel group distribution is enforced locally at a scale of four-pixel clusters.

In some embodiments of the depth imaging system, the grating structure is configured to partition the plurality of pixels according to a design rule specifying that within any given $2 \times 2$ pixel cluster, there are two dark pixels and two bright pixels of either the same or different polarities. In some instances, the TDM comprises a grating axis extending within a plane of incidence in which the bright-positive and bright-negative pixels are sensitive to angle of incidence; and the grating structure is configured to partition the plurality of pixels according to an additional design rule specifying:

(a) if the two dark pixels in the given $2 \times 2$ pixel cluster are aligned along a direction perpendicular to the grating axis, the two bright pixels within the given $2 \times 2$ pixel cluster are either both bright-positive or both bright-negative; and

(b) if the two dark pixels in the given $2 \times 2$ pixel cluster are aligned along a direction not perpendicular to the grating axis, the two bright pixels within the given $2 \times 2$ pixel cluster consist of one bright-positive pixel and one bright-negative pixel.

In some embodiments of the depth imaging system, the TDM comprises one or more mask layers disposed over the image sensor. In some instances, the one or more mask layers consist of a single mask layer disposed over the image sensor. In other instances, the one or more mask layers consist of a stack of multiple mask layers disposed over the image sensor.

In some embodiments of the depth imaging system, at least one of the one or more mask layers comprises an array of blocks arranged on a base substrate. In some instances, each block comprises a lower prism and an upper prism, with the lower prism having a larger base to form a stepped structure. In some instances, the lower and upper prisms of each block are hexagonal or rectangular. In some instances, each block is centered over a boundary between a bright-positive pixel and a bright-negative pixel.

In accordance with another aspect, there is provided a method for depth imaging, comprising:

diffracting light received from a scene with a transmissive diffraction mask (TDM) to generate diffracted light encoding angle-of-incidence information;
detecting the diffracted light with an image sensor comprising a plurality of pixels, wherein the TDM spatially maps the diffracted light onto distinct pixel groups of the plurality of pixels, the distinct pixel groups comprising: (i) bright-positive pixels that receive a portion of the diffracted light and exhibit a pixel response that increases with increasing angle of incidence; (ii) bright-negative pixels that receive another portion of the diffracted light and exhibit a pixel response that decreases with increasing angle of incidence; and (iii) dark pixels that receive substantially no diffracted light and exhibit substantially no pixel response, the dark pixels being interspersed among the bright-positive pixels and the bright-negative pixels to reduce pixel crosstalk within the image sensor; and
determining depth information about the scene based on differences between the pixel responses of the bright-positive and bright-negative pixels.

In some embodiments of the method, the TDM partitions the plurality of pixels according to a design rule specifying an overall pixel group distribution of 25% bright-positive pixels, 25% bright-negative pixels, and 50% dark pixels. In some instances, the design rule for the overall pixel group distribution is enforced locally at a scale of four-pixel clusters.

In some embodiments of the method, the TDM partitions the plurality of pixels according to a design rule specifying that within any given 2×2 pixel cluster, there are two dark pixels and two bright pixels of either the same or different polarities. In some instances, the TDM comprises a grating axis extending within a plane of incidence in which the bright-positive and bright-negative pixels are sensitive to angle of incidence; and the TDM partitions the plurality of pixels according to an additional design rule specifying:

(a) if the two dark pixels in the given 2×2 pixel cluster are aligned along a direction perpendicular to the grating axis, the two bright pixels within the given 2×2 pixel cluster are either both bright-positive or both bright-negative; and
(b) if the two dark pixels in the given 2×2 pixel cluster are aligned along a direction not perpendicular to the grating axis, the two bright pixels within the given 2×2 pixel cluster consist of one bright-positive pixel and one bright-negative pixel.

In some embodiments of the method, the TDM comprises one or more mask layers disposed over the image sensor. In some instances, the one or more mask layers consist of a single mask layer disposed over the image sensor. In other instances, the one or more mask layers consist of a stack of multiple mask layers disposed over the image sensor.

In some embodiments of the method, at least one of the one or more mask layers comprises an array of blocks arranged on a base substrate. In some instances, each block comprises a lower prism and an upper prism, with the lower prism having a larger base to form a stepped structure. In some instances, the lower and upper prisms of each block are hexagonal or rectangular. In some instances, each block is centered over a boundary between a bright-positive pixel and a bright-negative pixel.

In accordance with another aspect, there is provided a transmissive diffraction mask (TDM) for mitigating pixel crosstalk in depth imaging, comprising a grating structure configured to diffract light received from a scene by encoding angle-of-incidence information and directing the diffracted light onto an image sensor comprising a plurality of pixels, wherein the grating structure is further configured to spatially map the diffracted light onto distinct pixel groups of the plurality of pixels, the distinct pixel groups comprising: (i) bright-positive pixels onto which the TDM is configured to direct a portion of the diffracted light, the bright-positive pixels exhibiting a pixel response that increases with increasing angle of incidence; (ii) bright-negative pixels onto which the TDM is configured to direct another portion of the diffracted light, the bright-negative pixels exhibiting a pixel response that decreases with increasing angle of incidence; and (iii) dark pixels onto which the TDM is configured to direct substantially no diffracted light, the dark pixels exhibiting substantially no pixel response and being interspersed among the bright-positive pixels and the bright-negative pixels to reduce pixel crosstalk within the image sensor.

In some embodiments of the TDM, the grating structure is configured to partition the plurality of pixels according to a design rule specifying an overall pixel group distribution of 25% bright-positive pixels, 25% bright-negative pixels, and 50% dark pixels, the design rule being enforced locally at a scale of four-pixel clusters.

In some embodiments of the TDM, the TDM comprises a grating axis extending within a plane of incidence in which the bright-positive and bright-negative pixels are sensitive to angle of incidence, and wherein the grating structure is configured to partition the plurality of pixels according to: a first design rule specifying that within any given 2×2 pixel cluster, there are two dark pixels and two bright pixels of either the same or different polarities, and a second design rule specifying:

(a) if the two dark pixels in the given 2×2 pixel cluster are aligned along a direction perpendicular to the grating axis, the two bright pixels within the given 2×2 pixel cluster are either both bright-positive or both bright-negative; and
(b) if the two dark pixels in the given 2×2 pixel cluster are aligned along a direction not perpendicular to the grating axis, the two bright pixels within the given 2×2 pixel cluster consist of one bright-positive pixel and one bright-negative pixel.

In some embodiments of the TDM, the TDM comprises one or more mask layers disposed over the image sensor. In some instances, the one or more mask layers consist of a single mask layer disposed over the image sensor. In other instances, the one or more mask layers consist of a stack of multiple mask layers disposed over the image sensor.

In some embodiments of the TDM, at least one of the one or more mask layers comprises an array of blocks arranged on a base substrate. In some instances, each block comprises a lower prism and an upper prism, with the lower prism having a larger base to form a stepped structure. In some instances, the lower and upper prisms of each block are hexagonal or rectangular. In some instances, each block is centered over a boundary between a bright-positive pixel and a bright-negative pixel.

Other method steps may be performed before, during, or after the steps described herein. The order of one or more steps may also differ, and some of the steps may be omitted, repeated, or combined, as the case may be. It is also to be noted that certain steps may be performed using various analysis and processing techniques, which may be implemented in hardware, software, firmware, or any combination thereof.

Other features and advantages of the present disclosure will become more apparent upon reading the following non-restrictive description of specific embodiments, provided by way of example only, with reference to the appended drawings. Although specific features described in the above summary and the following detailed description may be associated with particular embodiments or aspects, these features can be combined with one another unless stated otherwise.

**BRIEF DESCRIPTION OF THE DRAWINGS**

Figs. 1 to 15 depict various aspects, features, and implementations of, or related to, the techniques disclosed herein.

Fig. 1 is a schematic perspective view of a depth imaging system including a transmissive diffraction mask (TDM).

Fig. 2 is a schematic front elevation view of the system shown in Fig. 1.

Figs. 3A-3C are schematic representations of another TDM-based depth imaging system receiving light at three different angles of incidence $\theta$: normal incidence ($\theta = 0$) in Fig. 3A; oblique incidence ($\theta = \theta_{max} > 0$) in Fig. 3B; and oblique incidence ($\theta = -\theta_{max} < 0$) in Fig. 3C.

Fig. 4 is a graph showing the individual pixel response curves of the odd pixels ($I_+$) and even pixels ($I_-$) of the TDM-based depth imaging system illustrated in Figs. 3A-3C, plotted as functions of the angle of incidence $\theta$ for a given incident light intensity $I_0$. Fig. 4 also shows the curves of the sum ($I_{sum} = I_+ + I_-$) and the difference ($I_{diff} = I_+ - I_-$) of the odd and even pixel responses as functions of $\theta$.

Fig. 5 is a schematic side view of another example of another TDM-based depth imaging system.

Fig. 6 is a graph showing a disparity curve plotted as a function of the inverse of object distance, obtained using a TDM-based depth imaging system.

Fig. 7 is a schematic representation of a pixel crosstalk map centered on a pixel of an image sensor, illustrating the distribution and relative strength of crosstalk between the central pixel and its neighboring pixels.

Fig. 8 is a schematic exploded perspective view of a depth imaging system including a TDM and an image sensor, in accordance with an embodiment, in which the TDM is configured to produce a diffraction pattern that forms a distribution of bright-positive, bright-negative, and dark pixels on the image sensor to mitigate crosstalk.

Figs. 9A-9F illustrate six examples of pixel group arrangements in an image sensor produced by an overlying TDM. The arrangements include 25% bright-positive, 25% bright-negative, and 50% dark pixels, with variations in local enforcement of the 25-25-50 design rule and repeating pattern sizes and shapes.

Figs. 10A-10F illustrate six additional pixel group arrangements showing alternative enforcement of the 25-25-50 design rule.

Fig. 11 illustrates a pixel group arrangement for a depth imaging system incorporating two sets of TDMs with orthogonal grating axes arranged in a checkerboard pattern, enabling depth capture along multiple directions.

Figs. 12A-12D illustrate examples of pixel group arrangements overlaid with corresponding crosstalk maps, comparing a baseline configuration without dark pixels (Fig. 12A) to three configurations including bright-positive, bright-negative, and dark pixels for crosstalk mitigation.

Figs. 13A-13C illustrate examples of TDM designs including a single mask layer configured to produce the pixel group arrangements shown in Figs. 13D-13F, respectively. Figs. 13G-13I are exploded perspective views of embodiments of depth imaging systems including a TDM and an underlying image sensor, with Fig. 13G corresponding to the TDM design of Fig 13A and the pixel group arrangement of Fig. 13D, Fig. 13H corresponding to Figs. 13B and 13E, and Fig. 13I corresponding to Figs. 13C and 13F.

Figs. 14A-14D illustrate other embodiments of depth imaging systems, each including a TDM with multiple mask layers disposed over an underlying image sensor, with the combination of mask layers configured to produce the depicted pixel group arrangements.

Fig. 15 is a flow diagram of an embodiment of a method for depth imaging with pixel crosstalk mitigation.

## DETAILED DESCRIPTION

The present disclosure relates to techniques for mitigating pixel crosstalk in 3D imaging systems that use diffraction gratings disposed over pixel-based image sensors to achieve depth perception and other imaging capabilities.
These systems incorporate a diffraction grating element, referred to herein as a transmissive diffraction mask (TDM), which diffracts incoming light from a scene into diffracted light patterns encoding angle-of-incidence information. The image sensor detects this diffracted light, generating angle-modulated pixel responses that are subsequently processed to extract depth information. Typically, this depth information is derived from differential response signals computed from pixel pairs with angular responses that vary inversely as the angle of incidence changes. This process effectively creates a disparity map representing two distinct viewpoints of the scene captured by a single image sensor. However, pixel-to-pixel crosstalk, where light from one pixel leaks to adjacent pixels, can distort these angular responses, diminishing the strength of the differential response signal, adding noise to the disparity map, and compromising the accuracy of depth measurements. This issue is particularly pronounced at longer wavelengths, such as in the infrared range.
The techniques disclosed herein employ TDMs with specific configurations designed to diffract incoming light in such a way that the diffracted light is partitioned and mapped onto three distinct pixel groups with different response characteristics imparted by the TDM's grating structure. These groups include (i) bright-positive pixels, which exhibit an increasing response as the angle of incidence of the incoming light increases; (ii) bright-negative pixels, which exhibit a decreasing response as the angle of incidence increases; and (iii) dark pixels, which receive little to no diffracted light and thus exhibit negligible or zero response. This structured partitioning of diffracted light by the TDM to achieve this bright-and-dark pixel distribution serves two main purposes. First, the contrasting angular responses of the bright-positive and bright-negative pixels enable the calculation of angle-sensitive differential response signals. Second, the dark pixels, interspersed between them, act as buffers to effectively reduce pixel-to-pixel crosstalk. In certain configurations, half of the pixels are dark, while the remaining pixels are evenly split between bright-positive and bright-negative, although this specific distribution is not a strict requirement.
By incorporating dark pixels among the two types of bright pixels, two benefits can be achieved. First, since the dark pixels receive no or nearly no light, they do not contribute to crosstalk in neighboring bright pixels. Second, potential crosstalk between bright pixels of different types is partially counteracted by adjacent dark pixels, thereby reducing the attenuation of the differential response signals and preserving their integrity. This specific arrangement enables the system to maintain sensitivity in depth measurements while effectively mitigating the adverse effects of pixel crosstalk, particularly in spectral ranges that are more susceptible, such as the infrared.

The disclosed techniques have potential applications in various fields that could benefit from pixel crosstalk mitigation. Examples include consumer electronics (e.g., mobile phones, tablets, laptops, webcams, and notebooks, gaming, virtual and augmented reality, photography), automotive applications (e.g., advanced driver assistance systems, in-cabin monitoring), industrial applications (e.g., inspection, robot guidance, object identification and tracking), medical applications (e.g., endoscopy), and security and surveillance (e.g., motion tracking, traffic monitoring, drones, agricultural inspection).

Various aspects, features, and implementations of the present techniques are described below with reference to the figures.

Before discussing crosstalk mitigation techniques in more detail, a general overview of the structure, configuration, and operation of TDM-based depth imaging systems is provided. These aspects are well established and do not need to be discussed in detail, except where necessary for understanding the disclosed techniques. Notably, the operation of these systems is based on principles presented in the following co-assigned international patent applications: PCT/CA2017/050686 (published as WO 2017/210781), PCT/CA2018/051554 (published as WO 2019/109182), PCT/CA2020/050760 (published as WO 2020/243828), PCT/CA2021/051635 (published as WO 2022/104467), and PCT/CA2022/050018 (published as WO 2022/150903); as well as in Neeth Kunnath, Depth from Defocus Using Angle Sensitive Pixels Based on a Transmissive Diffraction Mask (Master's thesis, McGill University Libraries, 2018). The contents of these documents are incorporated herein by reference in their entirety.

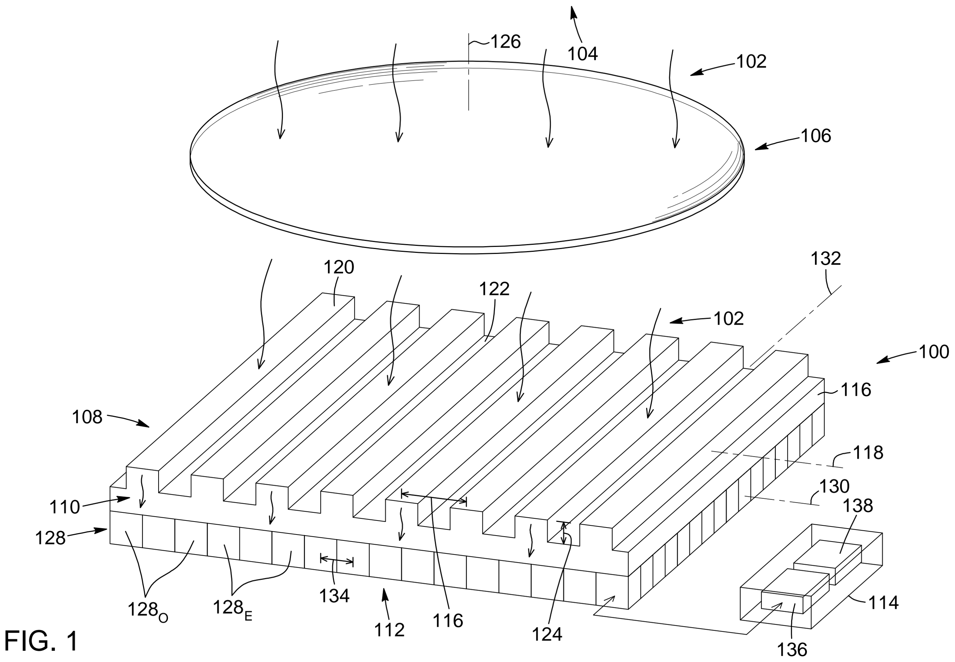

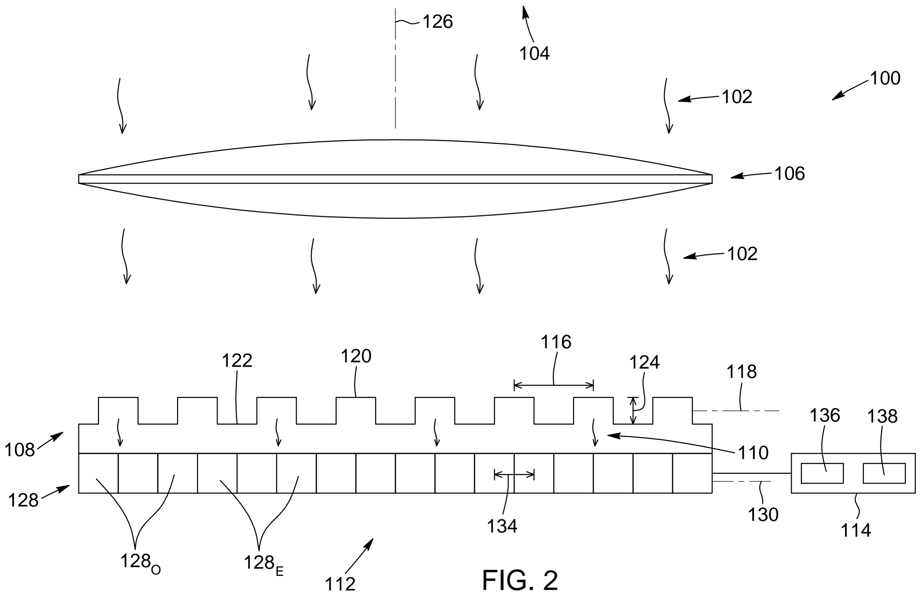

Figs. 1 and 2 show a TDM-based depth imaging system 100 configured to capture image data including depth information from light 102 received from a scene 104. To illustrate the operation of the system 100, this example considers only bright pixels, without dark pixels included for crosstalk mitigation. However, the same general imaging principles apply when dark pixels are included, as described in the embodiments disclosed below. The system 100 includes an imaging lens 106 that collects and focuses light 102 incident from the scene 104; a TDM 108 that receives the focused light 102 and generates diffracted light 110 containing encoded angle-of-incidence information; an image sensor 112 that detects the diffracted light 110 and converts it into image data; and a computer device 114 that processes the image data to determine depth information. It is understood that these figures are schematic representations and may omit certain components useful for practical implementation.

The TDM 108 enables 3D imaging by producing diffracted light 110 with intensity patterns modulated by the angular distribution of the incoming light 102 focused by the imaging lens 106. The image sensor 112 samples these diffracted light patterns on a per-pixel basis, generating image data for depth map extraction, surface reconstructions, image refocusing, and other applications. Depending on the application, this image data may be acquired as still images or video streams.

The TDM 108 may be characterized by a grating period 116 along a grating axis 118. In this embodiment, the TDM 108 is a binary phase grating with a two-level, square-wave profile of alternating ridges 120 and grooves 122. The profile may be further defined by its duty cycle (ratio of ridge width to grating period) and step height 124 (level difference between ridges and grooves). Certain designs may have grating periods ranging from about 0.1 $\mu$m to about 20 $\mu$m, and step heights from about 0.1 $\mu$m to about 1 $\mu$m. While the depicted TDM 108 features a single grating axis 118 across its full extent, other embodiments may include a TDM 108 with regions having different grating axis orientations. Additionally, the TDM 108 may cover all or part of the pixel array, depending on application needs.

The imaging lens 106 focuses incoming light 102 onto the TDM 108 and defines the optical axis 126 of the system 100. It may be a single or multi-element lens, and it may be focus-tunable.

The image sensor 112 includes an array of photosensitive pixels 128 arranged in rows and columns defined by orthogonal first and second pixel axes 130, 132. The image sensor 112 may contain hundreds of thousands or millions of pixels 128 and may use CMOS, CCD, or other suitable sensor technologies. The imaging system 100 may be implemented by integrating the TDM 108 onto an existing image sensor 112 or provided as a custom-designed device incorporating all necessary components.

The pixel array is characterized by a pixel pitch 134, which may range between about 0.7 $\mu$m and about 10 $\mu$m. The ratio $R$ of the grating period 116 to the pixel pitch 134 can vary depending on the application. In the embodiment illustrated in Figs. 1 and 2, $R = 2$, but other ratios are possible, including $R = 2n$ or $R = 2/(2n+1)$, where $n$ is a positive integer. In the illustrated configuration, each ridge and groove center aligns with pixel boundaries. However, alignment may vary based on factors such as the chief ray angle (CRA) function of the imaging lens 106, in which case the alignment may change across the array.

The computer device 114 processes the image data received from the image sensor 112 to generate an image the scene 104, including determining angle-of-incidence information and depth. The computer device 114 includes a processor 136 and a memory 138 for computation and data storage.

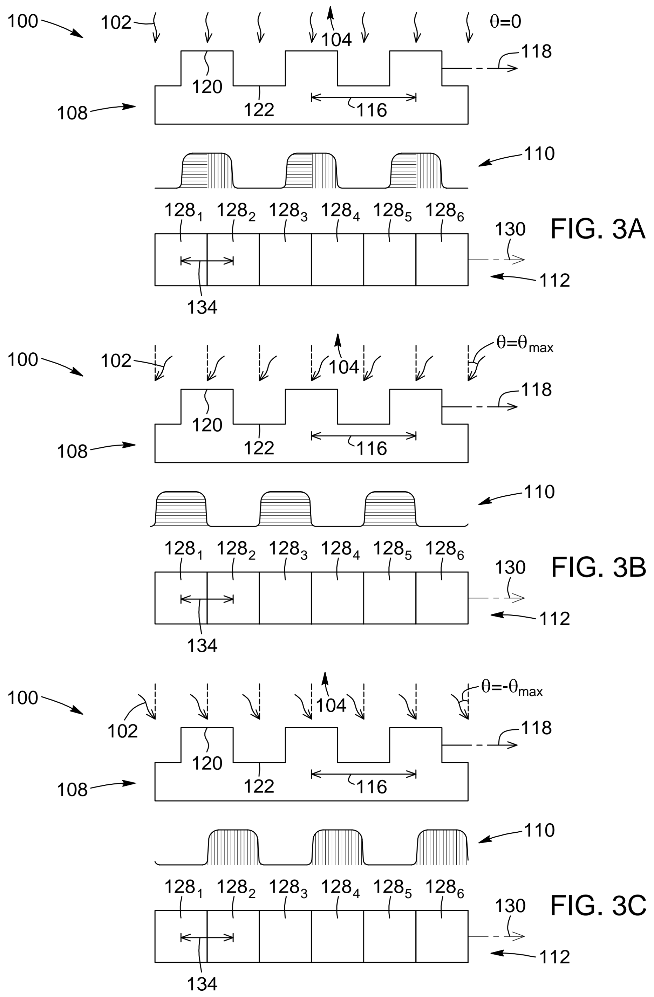

Figs. 3A-3C illustrate how a TDM-based imaging system 100 operates with different angles of incidence: $\theta = 0$ (Fig. 3A); $\theta = \theta_{max} > 0$ (Fig. 3B); and $\theta = -\theta_{max} < 0$ (Fig. 3C), considering only bright pixels for illustrative purposes. The TDM 108 generates diffracted light 110 from the incident light 102, which is detected by the pixels $128_1$-$128_6$. The operation of the system 100 leverages the Talbot effect, a near-field diffraction phenomenon in which plane waves incident on a periodic structure (e.g., a diffraction grating such as the TDM 108) produce self-images of the structure at regular distances. These self-images, known as Talbot images, occur at intervals determined by the Talbot length $z_T$. For a diffraction grating with period g, the Talbot length can be expressed as $z_T = \lambda/[1 - (1 - \lambda^2/g^2)^{1/2}]$, which simplifies to $z_T = 2g^2/\lambda$ when g is significantly larger than the wavelength $\lambda$. Amplitude gratings produce observable self-images at integer multiples of the half-Talbot length, $nz_T/2$. Phase gratings, such as the TDM 108 shown in Figs. 3A-3C, behave differently. It is their phase that is self-imaged at $nz_T/2$, which is not directly observable with intensity-sensitive photodetectors. However, phase gratings can generate detectable Talbot-like intensity patterns, known as Lohmann images, at planes shifted from $nz_T/2$, such as $z_T/4$ and $3z_T/4$.

In Figs. 3A-3C, the image sensor 112 is positioned in the near-field diffraction region of the TDM 108 to detect Lohmann images. This configuration may be achieved when the distance between the diffraction grating's profile (where the diffracted light 110 is formed) and the image sensor's light-receiving surface (where the diffracted light 110 is detected) ranges from about 0.2 $\mu$m to about 20 $\mu$m. For visible light, this distance may more specifically ranges between about 0.5 $\mu$m and about 8 $\mu$m, while for near infrared light (wavelength ranging from about 0.7 $\mu$m to 2.5 $\mu$m), the distance may be between about 1 $\mu$m and about 20 $\mu$m.

For these images, the diffracted light 110 exhibits an intensity pattern spatially modulated according to the grating period 116. A key feature of this pattern is its lateral shift along the grating axis 118 as the angle of incidence $\theta$ changes, while maintaining its period and overall shape. This shift is evident when comparing the intensity patterns in Figs. 3A, 3B, and 3C. The TDM 108 thus imparts an angle-dependent spatial modulation to the diffracted light's intensity pattern, which is sampled by the underlying pixels $128_1$-$128_6$.

By controlling the alignment between the TDM 108 and the image sensor 112, as well as the relationship between the grating period 116 and the pixel pitch 134, individual pixel responses vary with the angle of incidence $\theta$ due to these lateral shifts. For example, in Figs. 3A-3C, the intensities measured by the odd pixels $128_1$, $128_3$, $128_5$ are equal to (Fig. 3A), greater than (Fig. 3B), and less than (Fig. 3C) those measured by the even pixels $128_2$, $128_4$, $128_6$. This angle-dependent information, encoded by the TDM 108 and recorded by the image sensor 112 as intensity-based pixel responses, can be processed to provide depth information of the scene 104.

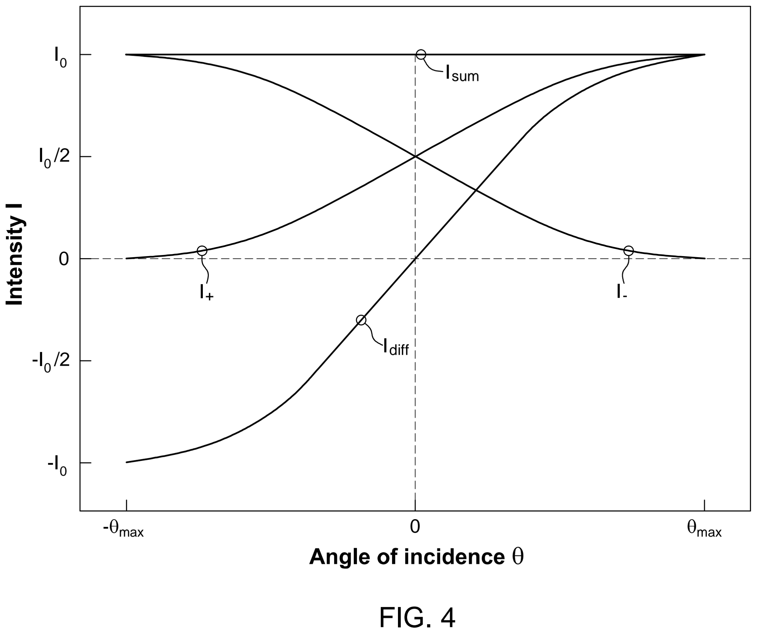

Referring to Fig. 4, the responses of odd ($I_+$) and even ($I_-$) pixels from Figs. 3A-3C are plotted as functions of the angle of incidence $\theta$ for a given intensity $I_0$ of the incident light. It can be observed that $I_+(\theta)$ and $I_-(\theta)$ exhibit complementary, asymmetrical angular responses, with $I_+(\theta) = I_-(-\theta)$. This indicates that $I_+$ and $I_-$ vary in opposite directions with respect to $\theta$, with $I_+$ increasing and $I_-$ decreasing as $\theta$ increases. In this context, and as used below when to referring to bright-positive and bright-negative pixels, the term "positive" refers to pixel responses, like $I_+$, whose slope with respect to $\theta$ is positive (i.e., the intensity value increases as $\theta$ increases), while the term "negative" refers to pixel responses, like $I_-$, whose slope with respect to $\theta$ is negative (i.e., the intensity value decreases as $\theta$ increases). Fig. 4 also shows the sum, $I_{sum} = I_+ + I_-$, and the difference $I_{diff} = I_+ - I_-$, as functions of $\theta$.

Since the pixel responses $I_+$ and $I_-$ vary inversely with $\theta$, their sum $I_{sum}$ remains largely independent of $\theta$, providing 2D image information without angular encoding. Conversely, the differential pixel response $I_{diff}$ varies asymmetrically with $\theta$, conveying the angle-of-incidence information encoded into the diffracted light 110 by the TDM 108. The pixel responses $I_+$, $I_-$, $I_{sum}$, and $I_{diff}$ can be mathematically expressed as follows:

$$I_{\pm}(\theta) = \frac{I_0}{2}[1 \pm m\sin(\beta\theta)], \qquad (1)$$

$$I_{sum} = I_0, \qquad (2)$$

$$I_{diff}(\theta) = I_0\, m\sin(\beta\theta), \qquad (3)$$

where $m$ is a modulation depth parameter and $\beta$ is an angular sensitivity parameter. For example, in Fig. 4, $m = 1$ and $\beta = \pi/(2\theta_{max})$. Although approximate, these expressions offer convenient models of pixel response behavior based on the incident light angle.

Equation (2) suggests that each summed pixel response $I_{sum}$ is obtained by summing one odd pixel response $I_+$ and one even pixel response $I_-$, while Equation (3) suggests that each differential pixel response $I_{diff}$ is obtained by subtracting one even pixel response $I_-$ from one odd pixel response $I_+$. This approach can be seen as a 2×1 binning mode. However, summed ($I_{sum}$) and differential ($I_{diff}$) pixel responses can also be computed using different binning modes or convolution techniques. For example, a 2×2 binning mode can be used (e.g., $I_{sum} = I_{1+} + I_{1-} + I_{2+} + I_{2-}$ and $I_{diff} = I_{1+} - I_{1-} + I_{2+} - I_{2-}$, where $I_{1\pm}$ and $I_{2\pm}$ are adjacent pairs of odd and even pixel responses). A convolution mode is another option, where a kernel is applied such that $I_{sum}$ and $I_{diff}$ have the same pixel resolution as $I_+$ and $I_-$. In this context, the terms "summed" and "differential" refer to both simple and complex sum-based and difference-based operations involving pixel responses.

The summed ($I_{sum}$) and differential ($I_{diff}$) pixel responses can be processed to generate depth information from a scene. In certain embodiments, the set of summed ($I_{sum}$) and differential ($I_{diff}$) pixel responses from all odd-even pixel pairs or groups may be used to compute a TDM disparity map. This map captures the slight disparity in viewpoints provided by the odd and even pixels, which are separated by an effective baseline distance typically smaller than the stereoscopic baseline distances of conventional stereoscopic imaging systems. The TDM disparity map can then be processed to produce a depth map of the scene.

Returning to Figs. 1 and 2, the pixels 128 can be divided into odd ($128_O$) and even ($128_E$) pixel groups, which are configured to sample complementary portions of the diffracted light 110. Using Equations (2) and (3), sets of summed ($I_{sum}$) and differential ($I_{diff}$) responses can be calculated from the sets of odd ($I_+$) and even ($I_-$) responses. The computer device 114 may process these pixel responses to calculate depth information, for example, by generating a TDM disparity map from the sets of ($I_{sum}$, $I_{diff}$). Alternatively, a TDM disparity map can be computed directly from the sets of odd ($I_+$) and even ($I_-$) pixel responses using stereoscopic matching techniques, which involve identifying corresponding points between images formed by the odd ($128_O$) and even ($128_E$) pixels.

In certain configurations, the image sensor 112 may incorporate a color filter array (not shown) positioned between the TDM 108 and the array of pixels 128. This filter array is configured to spatially and spectrally filter the diffracted light 110 produced by the TDM 108, based on its mosaic color pattern, before the light 110 is detected by the pixels 128. The color filters may include red, green, and blue, but could also feature other color options, such as yellow, cyan, magenta, white, or infrared. Various mosaic color patterns can be used, including both Bayer-type and non-Bayer-type arrangements. In color implementations, the image data and disparity map can be derived on a per-color basis by parsing the pixel responses according to their respective color components. Additionally, a microlens array may be disposed over the color filter array (or, if not color filter array is present, over the pixel array) to focus incoming light onto the pixels 128 and improve light collection efficiency.

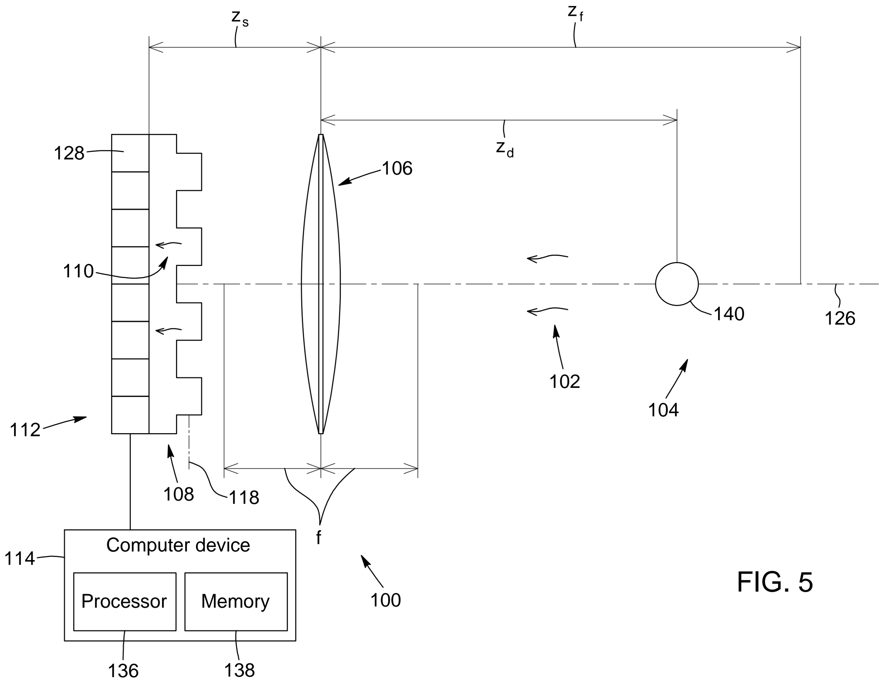

Generally, the TDM disparity provides relative depth information, but not absolute depth. Referring to Fig. 5, in certain embodiments, the absolute depth $z_d$ of an object 140 can be calculated from the TDM disparity $d_{TDM}$ using the following equation:

$$d_{TDM} = S_{TDM}\left(\frac{1}{z_d} - \frac{1}{z_f}\right), \tag{4}$$

where $S_{TDM}$ represents a depth sensitivity parameter, and $z_f$ is the focal distance of the imaging system 100. The depth sensitivity parameter $S_{TDM}$ can depend on various factors such as the parameters of the imaging lens 106 (e.g., focal length, f-number, optical aberrations), the angular response of the TDM 108, the pixel size, and the wavelength and polarization of the incoming light 102. The depth sensitivity parameter $S_{TDM}$ can be determined by calibration. The focal distance $z_f$ is related to the lens-to-sensor distance $z_s$ by the thinlens equation as follows:

$$\frac{1}{f} = \frac{1}{z_s} + \frac{1}{z_f}, \tag{5}$$

where $f$ is the focal length of the imaging lens 106.

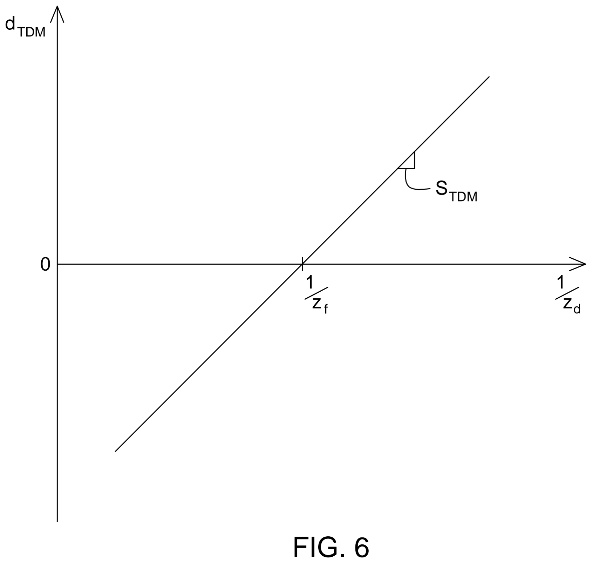

Fig. 6 shows a plot of the TDM disparity $d_{TDM}$ as a function $1/z_d$. In this example, the TDM disparity $d_{TDM}$ is linearly proportional to $1/z_d$, with a slope of $S_{TDM}$. Positive and negative $d_{TDM}$ indicate the object is behind and in front of the focal plane, respectively, with $d_{TDM} = 0$ when $z_d = z_f$ corresponding to the object being at the focal plane.

In practical implementations, however, the accuracy of depth determination can be influenced by various sensor-level effects, one of which is pixel crosstalk. Crosstalk between pixels with opposite angular responses, $I_+$ and $I_-$, can noticeably attenuate the differential pixel response, $I_{diff}$, reducing the system's ability to measure depth accurately. This attenuation affects overall sensitivity, disrupts response symmetry, and hampers the effective measurement of angular variations. To illustrate the impact of pixel crosstalk on the angular responses ($I_+$, $I_-$) of an odd-even pixel pair, crosstalk can be represented by a factor $\alpha_{ij}$, which denotes the fraction of the signal from pixel $i$ that leaks into pixel $j$. Assuming symmetrical crosstalk ($\alpha_{ij} = \alpha_{ji} = \alpha$) for illustration, the crosstalk-affected responses, $I_{+,\alpha}$, and $I_{-,\alpha}$, can be expressed as:

$$I_{+,\alpha} = (1-\alpha)I_+ + \alpha I_- = \frac{I_0}{2}[1 + (1-2\alpha)\,m\sin(\beta\theta)], \tag{6}$$

$$I_{-,\alpha} = (1 - \alpha)I_- + \alpha I_+ = \frac{I_0}{2}\left[1 - (1 - 2\alpha)\,m\sin(\beta\theta)\right]. \tag{7}$$

Consequently, the differential pixel response, $I_{diff,\alpha}$, becomes:

$$I_{\mathrm{diff},\alpha}(\theta) = I_0\,(1 - 2\alpha)m\sin(\beta\theta) = (1 - 2\alpha)I_{\mathrm{diff}}. \tag{8}$$

Equation (8) shows that pixel crosstalk attenuates the differential pixel response by a factor of $(1-2\alpha)$, reducing the contrast between the two pixel responses within each pair and weakening the system's ability to compute depth from pixel pairs with opposite angular responses. As $\alpha$ increases, the differential response $I_{\mathrm{diff},\alpha}$ decreases, eventually reaching zero when $\alpha = 0.5$. At this point, the system loses its ability to detect angular variations entirely.

While Equations (6)-(8) focus on the effect of crosstalk between two pixels for simplicity, real-world scenarios involve more complex interactions, as each pixel experiences crosstalk with multiple neighbors. The crosstalk strength typically diminishes with increasing distances between pixels.

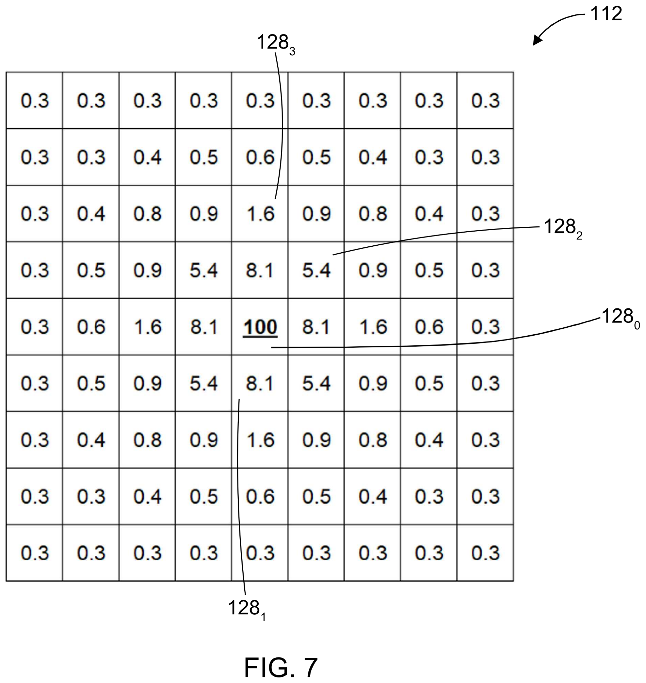

Fig. 7 depicts a crosstalk map centered on a specific pixel $128_0$ within an image sensor 112, providing a visual representation of coupling between pixels. The map quantifies how the signal from the central pixel $128_0$ signal influences its neighboring pixels. The central pixel $128_0$ is assigned a value of 100, indicating its full signal, while its immediate neighbors $128_1$ (left, right, top, bottom) show a crosstalk value of 8.1. Diagonal pixels $128_2$ exhibit a value of 5.4, and pixels $128_3$ two cells away have a value of 1.6. This map highlights the symmetrical reduction of crosstalk in all directions from the center pixel $128_0$, with the strongest crosstalk occurring in adjacent pixels $128_1$, followed by diagonal neighbors $128_2$, and a gradual decrease outward. Understanding these crosstalk patterns is useful for optimizing pixel array designs, particularly in high-precision applications such as depth sensing. It also helps identify areas where sensor performance may degrade due to pixel interactions. It should be noted that Fig. 7 represents an exemplary crosstalk map, as different pixel arrays may exhibit varying crosstalk characteristics. This variability allows for the selection or design of image sensors based on their specific crosstalk profiles, tailored to the needs of particular applications.

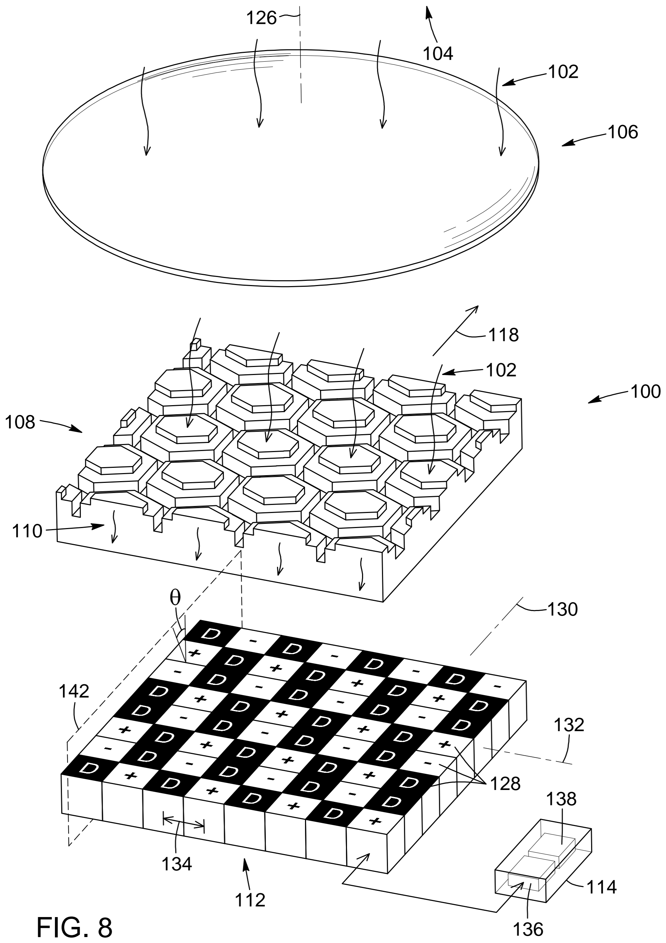

Fig. 8 illustrates an embodiment of a depth imaging system 100 designed to mitigate pixel crosstalk. The imaging system 100 generally includes a TDM 108 and an image sensor 112. The TDM 108 is configured to receive incoming light 102 from a scene 104 and generate diffracted light 110 with encoded angle-of-incidence information, utilizing near-field diffraction effects such as the Talbot effect. The image sensor 112 is located beneath the TDM 108 to detect the diffracted light 110 and may be positioned within the TDM's near-field region to capture the diffracted light 110 as Lohmann images.

The overall structure and operation of the depth imaging system 100 in Fig. 8 are generally similar to those described with reference to Figs. 1-6, including the use of a TDM 108 for angular encoding and an image sensor 112 for capturing diffracted light patterns. In particular, the system 100 determines a differential response signal ($I_{\mathrm{diff}}$) computed from the difference between the pixel responses ($I_+$, $I_-$) of groups of pixels (i.e., bright-positive and bright-negative pixels) having opposite angular responses, which conveys the angle-of-incidence and depth information. In embodiments that incorporate dark pixels to mitigate crosstalk, the same general imaging principles apply, with the TDM 108 governing which pixels act as bright-positive, bright-negative, or dark. Therefore, only the distinctions relevant to this embodiment are described in detail below.

The image sensor 112 includes an array of pixels 128 divided into three pixel groups, each characterized by a particular type of pixel response determined by the design of the TDM 108. Specifically, the TDM 108 incorporates a grating structure configured to partition and map the diffracted light 110 onto the image sensor 112 according to a diffraction pattern that forms three pixel groups with different response characteristics: bright-positive pixels (+), bright-negative pixels (-), and dark pixels (D). In general, each pixel 128 acquires its functional role as bright-positive, bright-negative, or dark based on how the TDM 108 directs diffracted light 110 onto it, rather than due to any physical difference between the pixels 128 themselves. In some embodiments, the image sensor 112 is configured to detect the diffracted light 110 in the visible or infrared region of the electromagnetic spectrum. As noted above, the adverse effects of pixel crosstalk generally increase at longer wavelengths, such as in the infrared range, and the present techniques may be particularly beneficial in this range.

The bright-positive (+) and bright-negative (-) pixels exhibit complementary pixel responses that vary inversely with the angle of incidence $\theta$ of the incoming light 102. The bright-positive pixels (+) display a response $I_+$ that increases with increasing $\theta$ (i.e., the intensity value has a positive slope with respect to $\theta$), while the bright-negative pixels (-) show a response $I_-$ that decreases as $\theta$ increases (i.e., the intensity value has a negative slope with respect to $\theta$) (see, e.g., Figs. 3A-3C and 4). The dark pixels (D) exhibit little to no response because the TDM 108 is specifically designed to prevent diffracted light 110 from reaching them. The dark pixels (D) are spatially interspersed or distributed among the bright-positive (+) and bright-negative (-) pixels to reduce overall pixel-to-pixel crosstalk within the image sensor 112.

It should be noted that expressions such as "receiving no light" and "exhibiting no pixel response" do not imply a complete absence of light or response. Rather, these terms indicate that the amount of light reaching the dark pixels from the TDM 108 is minimal or negligible for the system's operation. While a small amount of light may still reach the dark pixels, it remains insufficient to produce a meaningful effect on their responses, thereby fulfilling the intended functionality of exhibiting substantially no pixel response due to receiving substantially no light from the TDM 108.

In some embodiments, the weak responses from the dark pixels (D) may be read out during detection but disregarded during processing. In other embodiments, while the dark signals may be weak, they may still provide an additional viewpoint of the scene. In such instances, the dark signals may be used with either or both of the bright-positive and bright-negative signals to enhance depth information. Alternatively, the dark pixel responses may be omitted entirely from both readout and processing.

The depth imaging system 100 further includes a computer device 114 operatively coupled to the image sensor 112 and configured to determine depth information about the scene 104. In particular, this determination may involve computing summed and differential response signals ($I_{sum}$, $I_{diff}$) derived from the pixel responses ($I_+$, $I_-$) of bright-positive and bright-negative pixels, and using those signals to determine a disparity map, which can then be linked to absolute depth information, as described above with reference to Figs. 4-6 and Equations (1)-(5). The TDM 108 governs which pixels contribute to these response signals by directing light selectively onto the bright-positive (+) and bright-negative (-) pixels. In Fig. 8, the computer device 114 includes a processor 136 and a memory 138 for computation and data storage. The depth imaging system 100 may also include an imaging lens 106 configured to collect and focus the incoming light 102 from the scene 104 onto the TDM 108.

Fig. 8 provides a schematic representation of the depth imaging system 100 and may not illustrate all components useful for practical operation. For example, certain configurations may include a color filter array positioned between the TDM 108 and the array of pixels 128 to capture color information alongside depth data. A microlens array may also be disposed over the color filter array (or, in the absence of a color filter array, over the pixel array) to focus incoming light onto the photosensitive pixels and improve light-collection efficiency, as described above.

Various pixel group arrangements and design rules for the bright-positive (+), bright-negative (-), and dark (D) pixels are described below. In certain configurations, the grating structure of the TDM 108 is engineered to achieve an overall pixel distribution of 25% bright-positive pixels (+), 25% bright-negative pixels (-), and 50% dark pixels (D) across the full extent of the image sensor 112. In some embodiments, this 25-25-50 design rule may be enforced not only globally but also locally within smaller pixel clusters. For example, the rule may be applied within every four-pixel cluster of a specific type (e.g., 2×2, 1×4, or 4×1). In certain cases, it is applied to every 2×2 cluster but not every 1×4 or 4×1 cluster, while in other cases, it is applied to every 1×4 cluster but not every 2×2 or 4×1 cluster. In yet other cases, the rule may be satisfied for two four-pixel cluster type (e.g., every 2×2 and 1×4) but not the third (e.g., 4×1). In all enforced four-pixel clusters, there is exactly one bright-positive pixel, one bright-negative pixel, and two dark pixels.

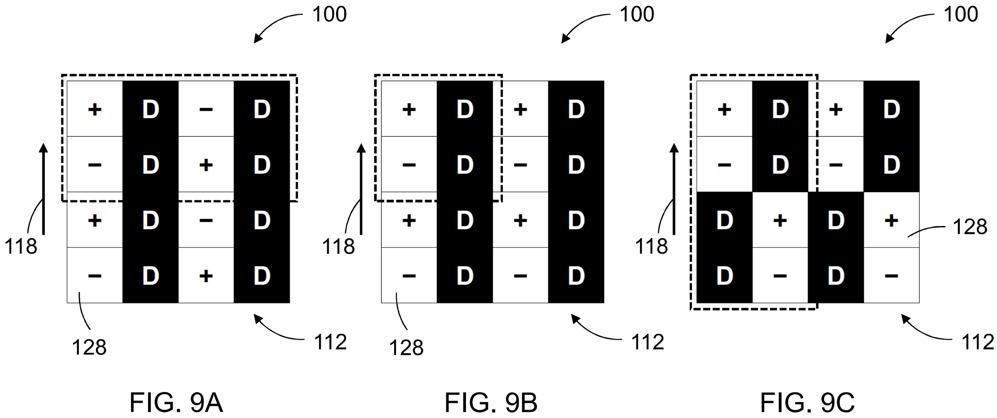

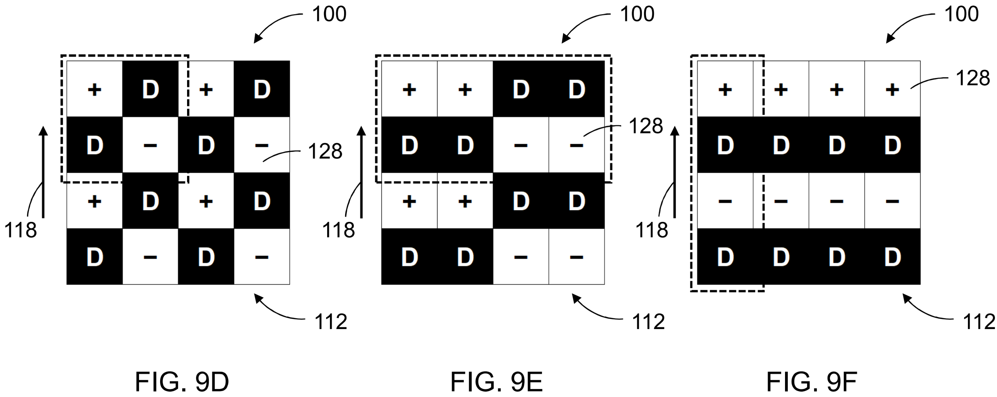

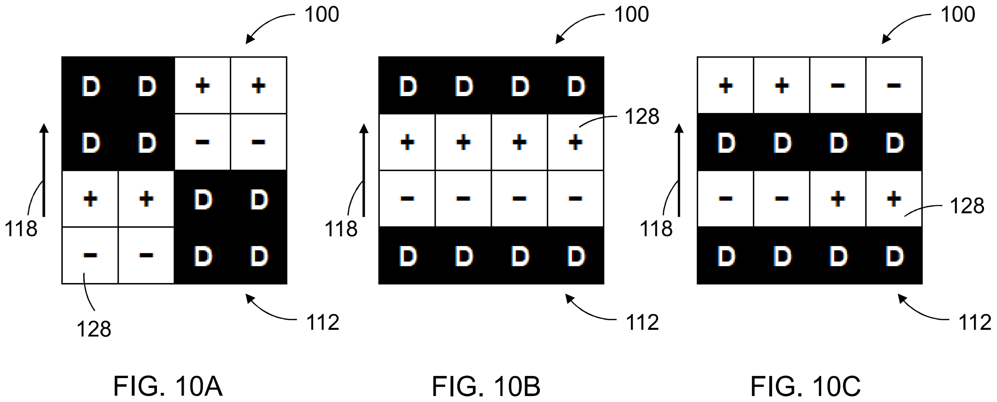

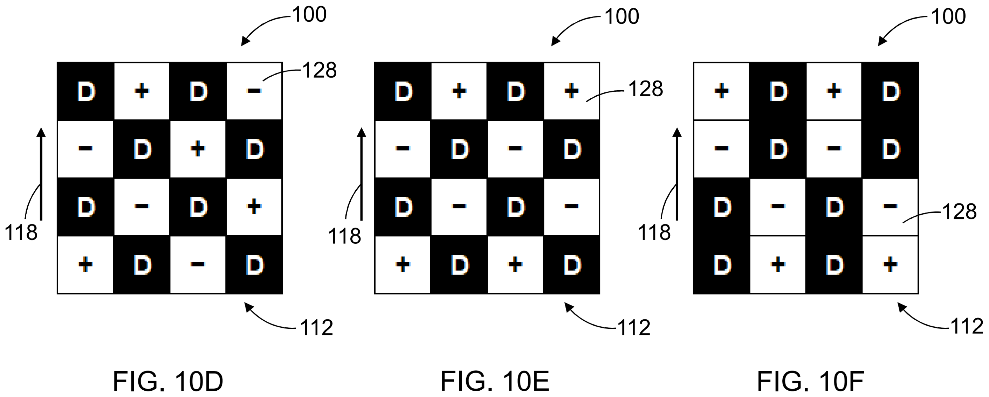

Figs. 9A-9F illustrate six distinct pixel group arrangements in which the 25-25-50 design rule is enforced over different pixel cluster types, including four-pixel clusters and larger clusters such as 2×4. Specifically, the rule is satisfied for every 2×2 cluster in Figs. 9A-9D, for every 1×4 cluster in Fig. 9A, and for every 4×1 cluster in Figs. 9C and 9F. It is appreciated that other configurations may impose less locally restrictive arrangements, requiring the design rule to be maintained over larger pixel groups. For example, in Fig. 9E, the rule is fulfilled within every 2×4 cluster. Figs. 10A-10F depict six additional pixel group arrangements where the 25-25-50 design rule is satisfied within every 4×1 cluster and, for Fig. 10E, also within every 1×4 cluster. It is further noted that, in other instances, the 25-25-50 design rule may not be enforced locally or even globally across the entire image sensor, as the disclosed techniques can operate effectively with various distributions and arrangements of bright-positive, bright-negative, and dark pixels.

Beyond the design rules governing the proportions of the three pixel groups within the image sensor 112 (e.g., the 25-25-50 rule at various scales), the pixel group arrangements can also be characterized by their repeating patterns. In Figs. 9A-9F, these repeating patterns are depicted as dashed squares or rectangles. Some arrangements, such as Figs. 9B and 9D, feature a 2×2 repeating pattern, while others use different configurations, including 4×1 (Fig. 9F), 2×4 (Figs. 9A and 9E), or 4×2 (Fig. 9C) patterns. Despite the variations in repeating pattern size, each design in Figs. 9A-9F adheres to the 25-25-50 rule within one or more specific types of pixel clusters, as described above. This flexibility supports a wide range of pixel group arrangements, enhancing the adaptability of the depth imaging system.

Certain design rules also take into account the orientation of the TDM's grating axis 118 relative to the pixel array. In the designs shown in Figs. 9A-9F and 10A-10F, the grating axis 118 runs parallel to the pixel columns and perpendicular to the pixel rows for definiteness, although the opposite convention may also be used. The grating axis 118 lies within the plane of incidence in which the bright-positive and bright-negative pixels are angle-sensitive, as the TDM 108 encodes angle-of-incidence information within this plane. This plane of incidence 142 is illustrated in Fig. 8, noting that the pixel group arrangement in this embodiment corresponds to that depicted in Fig. 9C. Additionally, the grating axis 118 generally defines the direction along which bright-positive (+) and bright-negative (-) pixels alternate between lines, whether in the same column (Figs. 9A-9C and 9F; Figs. 10A-10F) or across different columns (Figs. 9D and 9E).

In certain embodiments, the following design rules can be applied with respect to the orientation of the grating axis 118:

**1. Proportion of bright and dark pixels:** Within any given 2×2 pixel cluster, there are two dark pixels and two bright pixels, with the bright pixels being either of the same polarity (i.e., both bright-positive or both bright-negative) or of different polarities (i.e., one bright-positive and one bright-negative).

**2. Polarities of bright pixels:**

a. If the two dark pixels in the 2×2 cluster are aligned along a direction perpendicular to the grating axis 118 (i.e., along the same row), then the two bright pixels within this cluster have the same polarity.

b. Conversely, if the two dark pixels in the 2×2 cluster are aligned along a direction not perpendicular to the grating axis 118 (i.e., aligned along the same column or diagonally), then the two bright pixels within this cluster have different polarities (i.e., one bright-positive and one bright-negative).

All designs in Figs. 9A-9F comply with these two rules. However, compliance is not strictly required, as illustrated in Figs. 10A-10F. For example, the designs in Figs. 10A and 10B do not satisfy the first rule for every 2×2 pixel cluster, while the designs in Figs. 10C-10F satisfy the first rule but only partially meet the second rule.

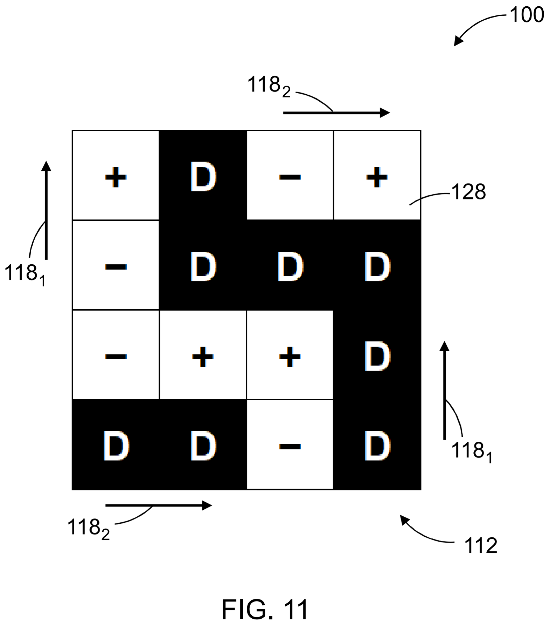

The designs illustrated in Figs. 9A to 9F and 10A to 10F each feature a TDM with a single grating axis orientation (e.g., vertical). However, alternative designs may involve multiple TDMs or TDM sets. For example, Fig. 11 depicts the configuration of pixel group arrangements for a depth imaging system 100 that incorporates two sets of TDMs with orthogonal grating axes $118_1$, $118_2$, arranged in a checkerboard pattern by interleaving rows and columns. Using two orthogonally oriented TDM sets allows the imaging system 100 to capture depth information from features aligned along different axes, such as horizontal and vertical. Each TDM is configured to produce the same pixel group arrangement (based on the arrangement shown in Fig. 9A in this example) but with orthogonal orientations depending on the corresponding TDM set. Specifically, the TDMs overlying the upper-left and lower-right 2×2 pixel clusters have a vertically oriented grating axis $118_1$, while those overlying the upper-right and lower-left clusters have a horizontally oriented grating axis $118_2$. Other regular or irregular arrangements of orthogonal or non-orthogonal TDM sets may also be employed in different embodiments. In some variants, orthogonal TDM sets could alternate only in rows, only in columns, or be randomly distributed. Certain configurations may include more than two TDM sets.

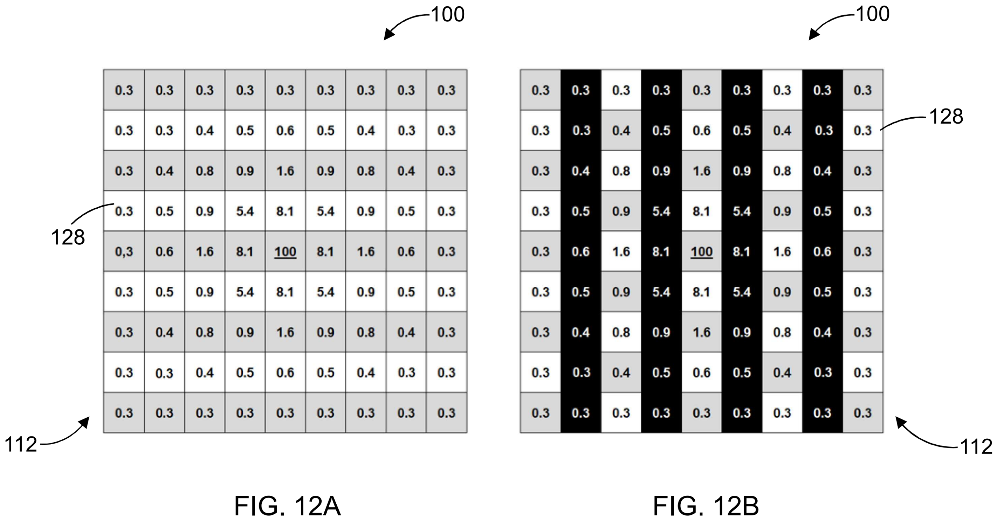

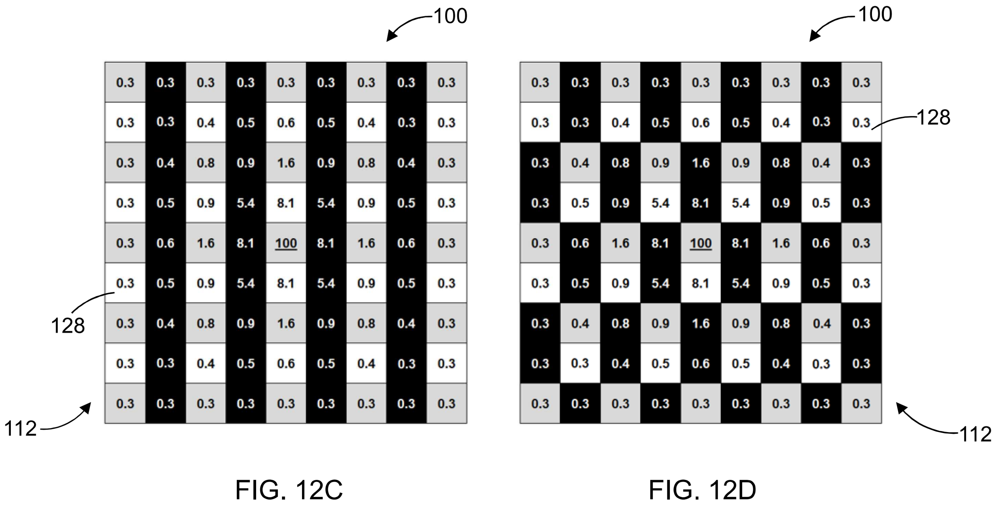

The impact of crosstalk on different pixel group arrangements can be evaluated using a crosstalk map associated with the image sensor under consideration. As an example, Figs. 12A-12D illustrate several pixel group arrangements, each overlaid with a corresponding crosstalk map. In all four cases, the crosstalk map corresponds to that shown in Fig. 7, provided here for illustrative purposes. Fig. 12A depicts a configuration without dark pixels, consisting only of alternating rows of bright-positive and bright-negative pixels. This arrangement serves as a baseline for comparison, as it does not incorporate the crosstalk mitigation techniques disclosed herein. By contrast, Figs. 12B-12D show three distinct pixel group arrangements that include bright-positive, bright-negative, and dark pixels, corresponding respectively to the designs illustrated in Figs. 9A- 9C. In Figs. 12A-12D, bright-positive pixels are shown in gray, bright-negative pixels in white, and dark pixels in black.

Table I below presents crosstalk metrics for the designs shown in Figs. 12A-12D, calculated based on the corresponding crosstalk map and pixel group arrangements. These metrics indicate, for a central pixel (assigned a normalized value of 100), the fraction of its signal that remains within bright-positive pixels (self-crosstalk), the fraction that leaks into dark pixels (bright-dark crosstalk), and the fraction that leaks into bright-negative pixels (bright-opposite crosstalk). In this example, the central pixel is bright-positive, although an analogous analysis applies when the central pixel is bright-negative, with the self-crosstalk and bright-opposite crosstalk values adjusted accordingly. In general, one objective of the disclosed techniques is to improve the self-to-opposite crosstalk ratio, defined as the ratio of self-crosstalk to bright-opposite crosstalk. This improvement can be achieved by increasing self-crosstalk, reducing bright-opposite crosstalk, or both.

**Table I. Crosstalk metrics for various pixel group arrangements.**

| Pixel Group Arrangement | Self-Crosstalk | Bright-Dark Crosstalk | Bright-Opposite Crosstalk | Self-to-Opposite Crosstalk Ratio |
|---|---|---|---|---|
| Fig. 12A | 74.95% | - | 25.05% | 2.99 |
| Fig. 12B | 59.49% | 25.05% | 15.46% | 3.85 |
| Fig. 12C | 60.52% | 25.05% | 14.55% | 4.16 |
| Fig. 12D | 59.49% | 27.99% | 12.53% | 4.75 |

The three configurations incorporating dark pixels all exhibit significantly improved self-to-opposite crosstalk ratios (3.85, 4.16, and 4.75) relative to the baseline configuration (2.99) without dark pixels. Among these, the design shown in Fig. 12D achieves the highest self-to-opposite crosstalk ratio for the particular crosstalk map considered. However, the optimal configuration may vary depending on the specific crosstalk map in use, and other factors or performance metrics (e.g., fabrication constraints or overall imaging performance) may also be considered when selecting the most appropriate design, beyond the self-to-opposite crosstalk ratio alone.

Returning to Fig. 8, it should be noted that while the different pixel groups exhibit distinct response behaviors (i.e., increasing with $\theta$, decreasing with $\theta$, or substantially no response), these responses are not inherently determined by the physical structure of the pixels 128 themselves. Pixels from different groups can (and generally do) share identical physical structures. Rather, it is the design of the TDM 108 that imparts these response characteristics to the pixels 128 by defining the spatial distribution of the bright-positive, bright-negative, and dark pixels across the image sensor 112.

Specifically, the TDM 108 governs the spatial pattern of diffracted light 110, thereby controlling both the light intensity incident by each pixel 128 and how this intensity varies with the angle of incidence $\theta$. For example, in some configurations, the TDM 108 redirects light that would otherwise reach a dark pixel to a particular bright pixel, rather than distributing it across multiple bright pixels, with the polarity of that bright pixel corresponding to the polarity that the dark pixel would have exhibited if it were a bright pixel. Various grating structures, defined by parameters such as the material composition, periodic structure, and the number of mask levels, may be employed to achieve a specific distribution of the three pixel groups described herein. In particular, a person skilled in the art, in light of the present disclosure, will understand how to design a TDM with an appropriate grating structure to realize a specified spatial distribution of bright-positive, bright-negative, and dark pixels across the image sensor. Such design may account for both the specific crosstalk map of the image sensor (see, e.g., Fig. 7) and the characteristics of the incident light collectors (e.g., imaging lens 106) across the entire sensor area, reducing crosstalk while enhancing sensitivity through appropriate selection of grating parameters (e.g., profile, size, orientation, material composition, and mask configuration).

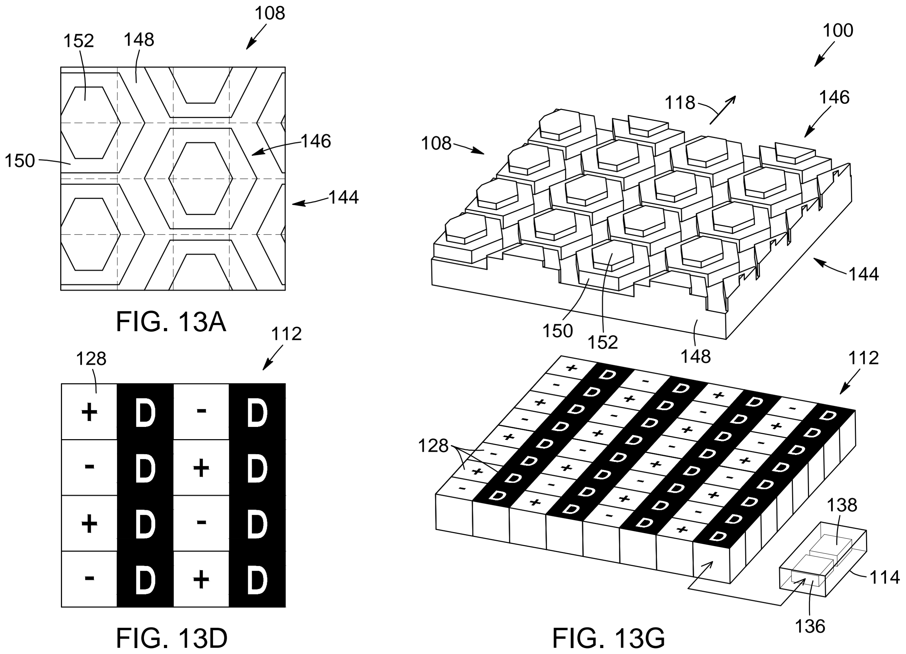

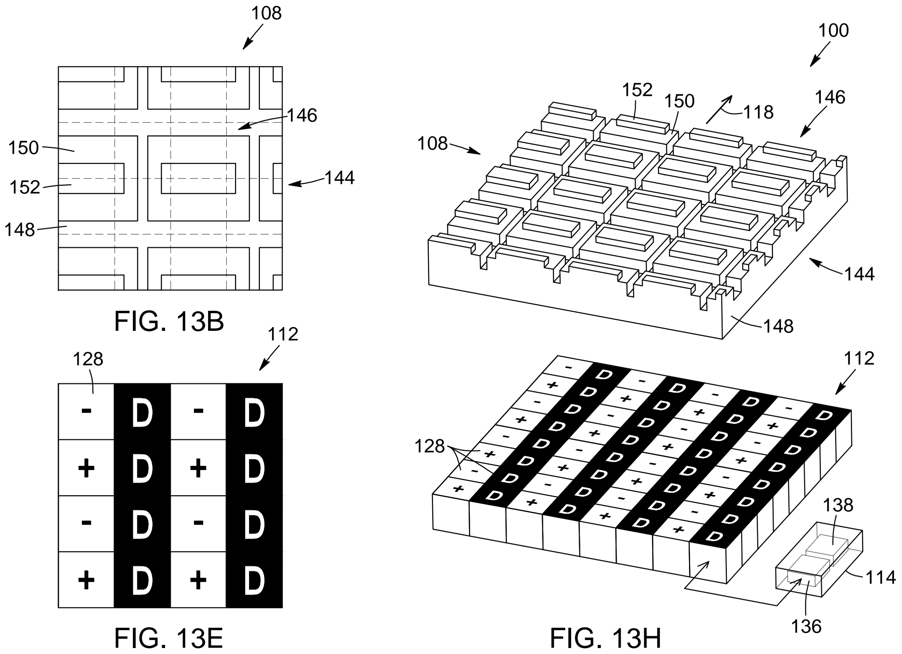

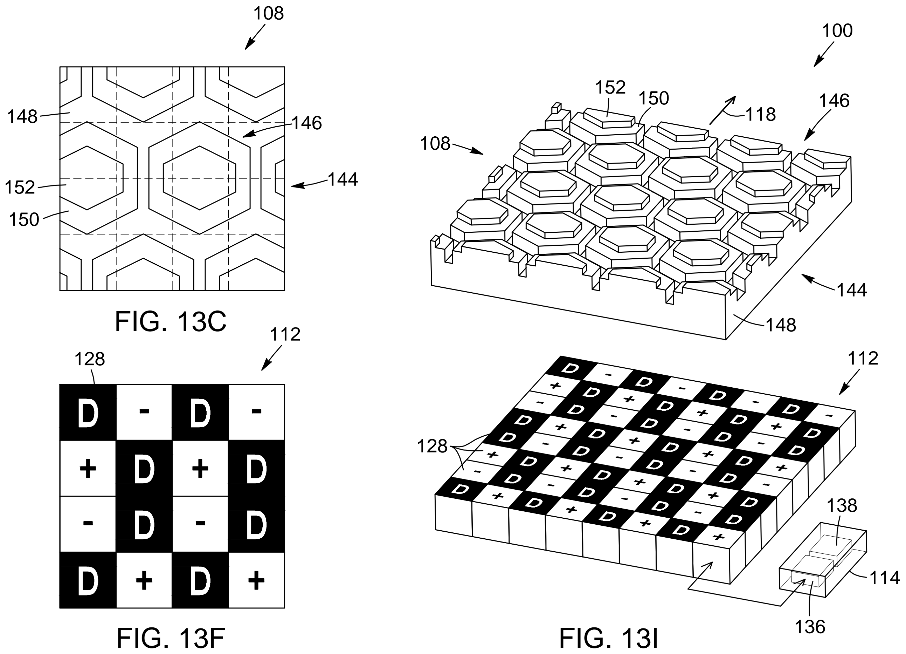

Figs. 13A-13C illustrate examples of TDM designs that achieve the pixel group arrangements depicted in Figs. 13D-13F, respectively, with pixel boundaries depicted by dashed lines for ease of reference. It is noted that Figs. 13D-13F correspond to the designs shown in Figs. 9A-9C, respectively. Figs. 13G-13I are exploded perspective views of depth imaging systems 100 including a TDM 108 and an underlying image sensor 112, with Fig. 13G corresponding to Figs. 13A and 13D; Fig. 13H corresponding to Figs. 13B and 13E; and Fig. 13I corresponding to Figs. 13C and 13F. It is further noted that the design of the TDM 108 in Fig. 13I corresponds to that presented in Fig. 8. Each of Figs. 13G-13I illustrates an example structure of a TDM 108 that produces diffracted light patterns forming the corresponding distribution of bright-positive, bright-negative, and dark pixels on the underlying image sensor 112.

The TDMs 108 shown in Figs. 13G-13I each feature a single mask layer 144 with a three-level structure. This layer 144 features an array of two-level blocks 146 arranged on a base substrate 148, where each block 146 includes a lower prism 150 and an upper prism 152, with the lower prism 150 having a larger base to form a stepped structure. The stepped configuration allows for controlled variation in optical path length across each block 146, which improves diffraction efficiency and enables achieving the desired light distribution on the image sensor 112. The blocks 146 have hexagonal cross-sections in Figs. 13G and 13I, and rectangular cross-sections in Fig. 13H, although other shapes are possible in alternative designs.

Each block 146 is positioned such that its center aligns directly above the boundary or transition between adjacent bright-positive (+) and bright-negative (-) pixels. This placement ensures that the resulting diffraction pattern correctly separates the light into the intended pixel groups, enhancing the angular modulation contrast and accuracy of the captured depth image. Furthermore, the dark (D) pixels are generally localized underneath portions of the TDM 108 that do not feature any block (i.e., the base substrate only).

The periodic arrangement and varying heights of these two-level blocks 146 relative to the base substrate 148 result in each of the TDMs 108 in Figs.13A-13C being embodied as diffraction grating structures with three distinct levels, which are configured to diffract light in patterns that define the corresponding pixel group arrangements on the underlying image sensor 112. It is appreciated that the TDM designs shown in Figs. 13A-13C are provided for illustrative purposes, and that various additional TDM configurations are also possible, including designs utilizing single-level blocks or blocks with three or more levels.

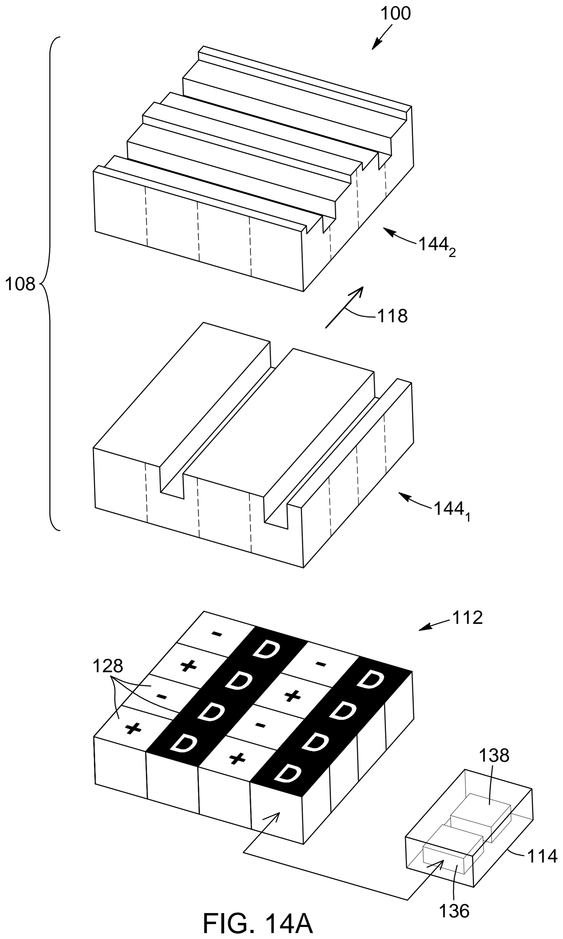

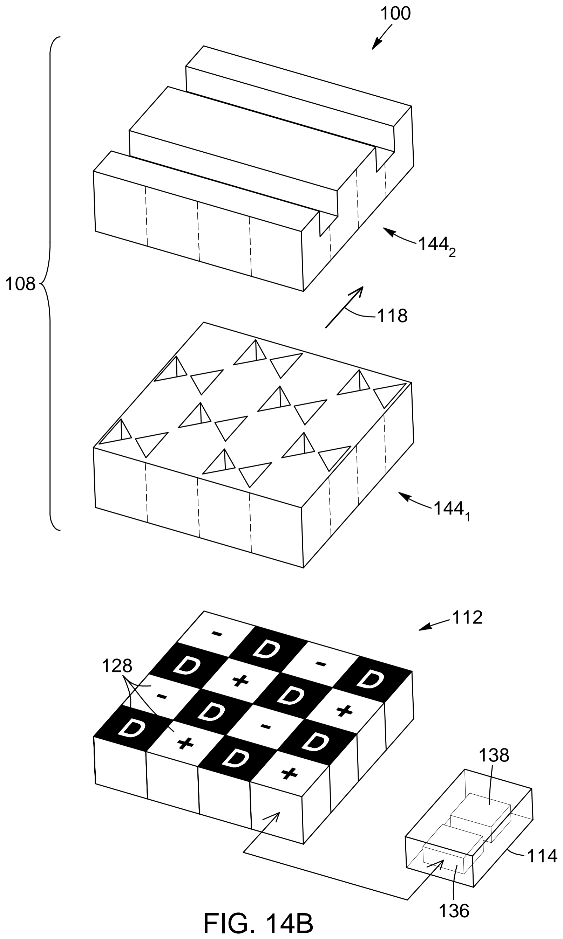

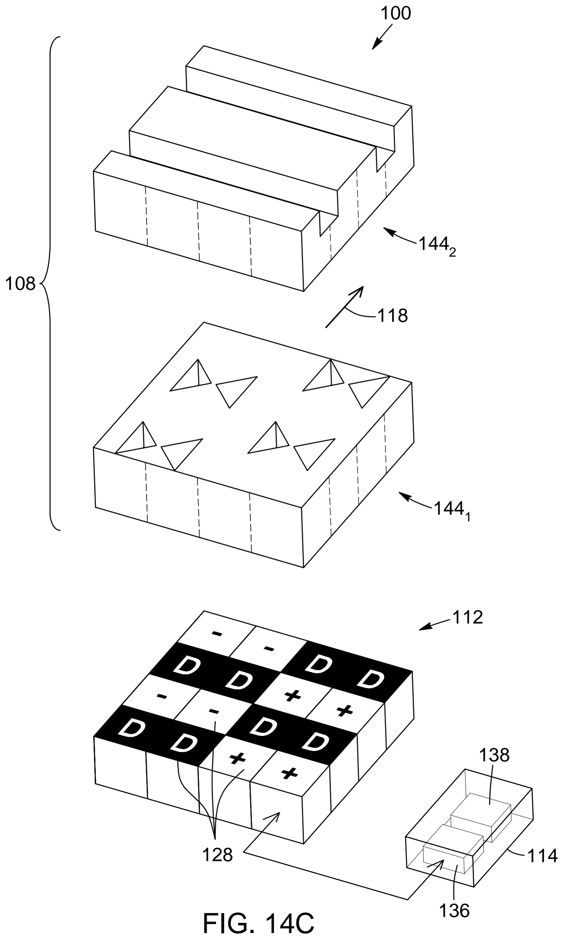

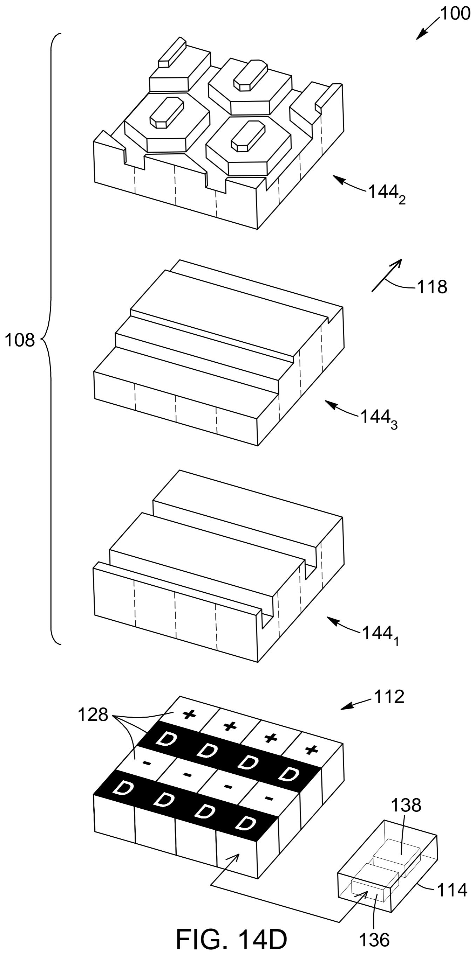

In other configurations, the TDMs 108 include multiple mask layers, each having two or more levels. Non-limiting embodiments of depth imaging systems 100 including such TDMs 108 disposed over underlying image sensors 112 are depicted in Figs. 14A-14D. In each of Figs. 14A-14C, the TDM 108 includes a bottom mask layer $144_1$ and a top mask layer $144_2$. In Fig. 14D, the TDM 108 further includes an intermediate mask layer $144_3$ interposed between the bottom and top mask layers $144_1$, $144_2$. In these figures, pixel boundaries are depicted by dashed lines on the mask layers $144_1$-$144_3$ for ease of reference. Each mask layer has a multi-level structure, and the combination of these layers is patterned to cooperatively diffract light such that the resulting diffraction patterns produce the desired pixel group arrangements on the underlying image sensor 112. By varying the number of layers, the number of levels in each layer, and the spatial arrangement of the patterned features, the TDM 108 can generate precise distributions of bright-positive (+), bright-negative (-), and dark (D) pixels.

It is noted that the pixel group arrangements shown in Figs. 14A-14D correspond to those of Figs. 9B, 9D, 9E, and 9F, respectively. Notably, with respect to the pixel group arrangement of Fig. 9B, it is seen that this arrangement can be achieved using either a TDM 108 with a single mask layer (see Figs. 13B, 13E, and 13H) or a TDM 108 with multiple mask layers (see Fig. 14A), illustrating the flexibility of TDM designs in achieving equivalent pixel distributions.

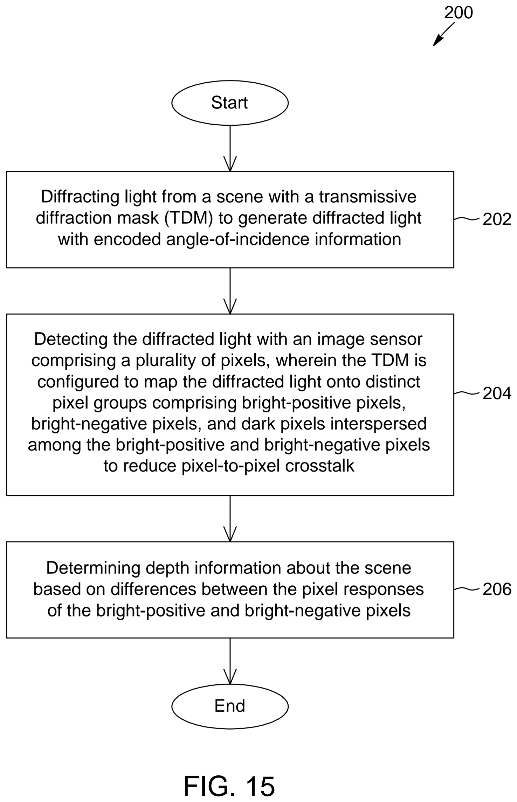

Referring to Fig. 15, a flow diagram illustrates a method 200 for depth imaging with pixel crosstalk mitigation. The method 200 may be implemented within a depth imaging system 100 that includes a transmissive diffraction mask (TDM) and an underlying image sensor. As described above with reference to the accompanying figures, the TDM is configured to diffract incoming light from a scene into structured light patterns encoding angle-of-incidence information and pixel group distribution, while the image sensor is configured to detect the resulting diffracted light.

In operation, the method 200 includes a step 202 of diffracting incoming light from a scene with the TDM to generate diffracted light that carries angular encoding, and a step 204 of detecting the diffracted light with an image sensor disposed beneath the TDM and including a plurality of pixels. The TDM maps the diffracted light onto distinct pixel groups: bright-positive pixels, configured to exhibit an increasing pixel response with increasing angle of incidence of the incoming light; bright-negative pixels, configured to exhibit a decreasing pixel response with increasing angle of incidence; and dark pixels, configured to exhibit substantially no pixel response due to receiving substantially no diffracted light from the TDM. The dark pixels are spatially interspersed among the bright-positive and bright-negative pixels to reduce pixel-to-pixel crosstalk and enhance differential-signal contrast. The various design rules and principles described above with respect to system embodiments are equally applicable to the method 200.

The method 200 further includes a step 206 of determining depth information about the scene based on differences between the pixel responses of the bright-positive and bright-negative pixels. In particular, the processing step 206 may include computing summed and differential response signals ($I_{sum}$, $I_{diff}$) as the sm and difference between the bright-positive ($I_+$) and bright-negative ($I_-$) pixel responses, as expressed above. The resulting $I_{diff}$ signal conveys the angular response of the diffracted light and can be used to derive the angle of incidence $\theta$ and corresponding disparity and depth maps of the scene, as described with respect to Figs. 3A-3C and 4-6.

Various aspects and features for implementing the method 200 have been described above in relation to system implementations.

Throughout the present description, similar features in the drawings have been given similar reference numerals. To avoid cluttering certain figures, some elements may not be indicated if previously identified in preceding figures. Elements in the drawings are not necessarily depicted to scale, emphasis being on clearly illustrating elements and structures of disclosed embodiments. Positional descriptors indicating the location or orientation of one element relative to another are used for ease and clarity of description. Unless indicated otherwise, these descriptors should be understood in the context of the figures and should not be considered limiting. Such spatially relative terms are intended to encompass different orientations in use or operation of disclosed embodiments, in addition to orientations exemplified in the figures. Furthermore, when a first element is referred to as being "on", "above", "below", "over", or "under" a second element, the first element can be directly or indirectly on, above, below, over, or under the second element, respectively, such that one or multiple intervening elements may be disposed between the first element and the second element.

The terms "a", "an", and "one" are defined herein to mean "at least one", that is, these terms do not exclude a plural number of elements, unless stated otherwise.

The term "or" is defined as "and/or", unless stated otherwise.

Terms such as "substantially", "generally", and "about", which modify a value, condition, or characteristic should be understood to mean that the value, condition, or characteristic falls within acceptable tolerances for the proper functioning of the described embodiment or within an acceptable range of experimental error. In particular, the term "about" generally denotes a range of values that one skilled in the art would consider equivalent to the stated value (e.g., having the same or an equivalent function or result). In some instances, the term "about" means a variation of $\pm 10\%$ of the stated value. It is noted that all numeric values used herein are assumed to be modified by the term "about", unless stated otherwise. The term "between" refers to a range defined by endpoints, inclusive of both endpoints, unless stated otherwise.

The term "based on" as used herein is intended to mean "based at least in part on", whether directly or indirectly, and to encompass both "based solely on" and "based partially on". In particular, the term "based on" may also be understood as meaning "from", "depending on", "representative of", "indicative of", "associated with", "relating to", and the like.

The terms "match", "matching", and "matched" refer herein to a condition where two elements are either identical or within a predetermined tolerance of each other. These terms encompass not only exact matches but also substantial, approximate, or subjective matches, as well as a best or highest match among various matching possibilities.

The terms "connected" and "coupled", along with their derivatives and variants, refer herein to any form of connection or coupling, whether direct or indirect, between two or more elements, unless stated otherwise. This connection or coupling can take various forms, including, but not limited to, mechanical, optical, electrical, magnetic, thermal, chemical, logical, fluidic, operational, or any combination thereof.

The term "concurrently" refers herein to the simultaneous or overlapping occurrence of two or more processes. The term "concurrently" does not necessarily imply complete synchronicity but encompasses various scenarios. These scenarios include the simultaneous occurrence of two processes; a first process that both begins and ends during the duration of a second process; and a first process that starts during the duration of a second process but ends after the second process is completed.

The term "measured" when referring to a quantity or parameter is intended to mean that the quantity or parameter can be measured either directly or indirectly. In the case of indirect measurement, the quantity or parameter can be derived, retrieved, inferred or otherwise determined from directly measured data.

The terms "light" and "optical", along with their variants and derivatives, encompass radiation across any appropriate region of the electromagnetic spectrum. This includes not only visible light but also extends to invisible regions such as the terahertz (THz), infrared (IR), and ultraviolet (UV) spectral bands. For example, certain embodiments of the disclosed techniques can use optical signals having a center wavelength ranging from about 175 nm in the deep ultraviolet to about 300 $\mu$m in the terahertz range, such as from about 400 nm at the blue end of the visible spectrum to about 1550 nm at telecommunication wavelengths, or between about 400 nm and about 650 nm to match the spectral range of typical red-green-blue (RGB) color filters. However, it should be noted that these wavelength ranges are provided for illustrative purposes, and the disclosed techniques may extend beyond these ranges. Furthermore, all descriptions provided herein as a function of wavelength could also be formulated as a function of frequency, wave number, energy, or other pertinent spectral parameters.

Certain embodiments can be advantageous in applications utilizing infrared radiation, particularly in the near-infrared region. Infrared radiation is typically divided into three regions: the near-infrared, with wavelengths ranging from about 0.7 $\mu$m to about 2.5 $\mu$m; the mid-infrared, with wavelength ranging from about 2.5 $\mu$m to about 25 $\mu$m; and the far-infrared, with wavelengths above about 2 $\mu$m. It is acknowledged that definitions of different infrared regions in terms of spectral ranges and limits may vary based on the technical field in question and are not intended to restrict the scope of the present techniques.

The term "processor" as used herein broadly refers to any electronic device, circuitry, or component capable of processing, receiving, or transmitting data or instructions, such as computer programs, commands, functions, processes, software codes, executables, applications, and similar entities. The term "processor" is meant to encompass a single processor or processing unit, multiple processors or processing units, or other suitably configured processing elements. When a processor includes multiple processing elements, these elements may be located at a single site or distributed across multiple sites interconnected by a communication network. Examples of communication networks include local area networks (LANs) and wide area networks (WANs) such as the Internet. Non-limiting examples of processors include general-purpose single- or multi-core processors; central processing units (CPUs); microprocessors; controllers; microcontrollers; digital signal processors (DSPs); programmable logic devices; a field-programmable gate arrays (FPGAs); application-specific integrated circuits (ASICs); digital processors or circuits; analog processors or circuits; state machines; and/or any other device capable of processing information.

The term "memory" as used herein broadly refers to any electronic device, circuitry, or component capable of storing electronic data or information. In some instances, the term "memory" may be used interchangeably with the term "computer readable storage medium". The term "memory" is meant to encompass a single memory or memory unit, multiple memories or memory units, or other suitably configured memory elements. When a memory includes multiple memory elements, these elements may be located at a single site or distributed across multiple sites interconnected by a communication network. Non-limiting examples of memories include random-access memories (RAM) of any type; read-only memories (ROM) of any type; magnetic storage devices; optical storage devices; solid-state drive (SSD) devices, such as flash drive memories; and any other tangible and/or non-transitory computer readable medium capable of storing electronic data or information.

Numerous modifications could be made to the embodiments described above without departing from the scope of the present disclosure and the appended claims.

**Claims**

1. A depth imaging system (100), comprising:

a transmissive diffraction mask (TDM) (108) configured to receive light (102) from a scene (104) and generate diffracted light (110) encoding angle-of-incidence information; and
an image sensor (112) positioned to detect the diffracted light (110) generated by the TDM (108) and comprising a plurality of pixels (128),
wherein the TDM (108) has a grating structure configured to spatially map the diffracted light (110) onto distinct pixel groups of the plurality of pixels (128), the distinct pixel groups comprising: (i) bright-positive pixels (+) that receive a portion of the diffracted light (110) from the TDM (108) and exhibit a pixel response that increases with increasing angle of incidence; (ii) bright-negative pixels (-) that receive another portion of the diffracted light (110) from the TDM (108) and exhibit a pixel response that decreases with increasing angle of incidence; and (iii) dark pixels (D) that receive substantially no diffracted light (110) from the TDM (108) and exhibit substantially no pixel response, the dark pixels (D) being interspersed among the bright-positive pixels (+) and the bright-negative pixels (-) to reduce pixel crosstalk within the image sensor (112).

2. The depth imaging system (100) of claim 1, further comprising a computer device (114) operatively coupled to the image sensor (112) and configured to determine depth information about the scene (104) based on differences between the pixel responses of the bright-positive (+) and bright-negative (-) pixels.

3. The depth imaging system (100) of claim 1 or 2, wherein the grating structure of the TDM (108) is configured to partition the plurality of pixels (128) according to a design rule specifying an overall pixel group distribution of 25% bright-positive pixels (+), 25% bright-negative pixels (-), and 50% dark pixels (D), and wherein the design rule for the overall pixel group distribution is enforced locally at a scale of four-pixel clusters.

4. The depth imaging system (100) of claim 1 or 2, wherein the grating structure is configured to partition the plurality of pixels (128) according to a design rule specifying that within any given 2×2 pixel cluster, there are two dark pixels (D) and two bright pixels of either the same or different polarities.

5. The depth imaging system (100) of claim 4, wherein:

the TDM (108) comprises a grating axis (108) extending within a plane of incidence (142) in which the bright-positive (+) and bright-negative (-) pixels are sensitive to angle of incidence; and
the grating structure is configured to partition the plurality of pixels (128) according to an additional design rule specifying:

(a) if the two dark pixels (D) in the given 2×2 pixel cluster are aligned along a direction perpendicular to the grating axis (118), the two bright pixels within the given 2×2 pixel cluster are either both bright-positive (+) or both bright-negative (-); and
(b) if the two dark pixels (D) in the given 2×2 pixel cluster are aligned along a direction not perpendicular to the grating axis (118), the two bright pixels within the given 2×2 pixel cluster consist of one bright-positive pixel (+) and one bright-negative pixel (-).

6. The depth imaging system (100) of any one of claims 1 to 5, wherein the TDM (108) comprises one or more mask layers (144) disposed over the image sensor (112).

7. The depth imaging system (100) of claim 6, wherein at least one of the one or more mask layers (144) comprises an array of blocks (146) arranged on a base substrate (148), and wherein each block (146) is centered over a boundary between a bright-positive pixel (+) and a bright-negative pixel (-).

8. The depth imaging system (100) of claim 7, wherein each block (146) comprises a lower prism (150) and an upper prism (152), with the lower prism (150) having a larger base to form a stepped structure, and wherein the lower (150) and upper (152) prisms of each block (146) are preferably hexagonal or rectangular.

9. A method (200) for depth imaging, comprising:

diffracting (202) light (102) received from a scene (104) with a transmissive diffraction mask (TDM) to generate diffracted light (110) encoding angle-of-incidence information;
detecting (204) the diffracted light (110) with an image sensor (112) comprising a plurality of pixels (128), wherein the TDM (108) spatially maps the diffracted light (110) onto distinct pixel groups of the plurality of pixels (128), the distinct pixel groups comprising: (i) bright-positive pixels (+) that receive a portion of the diffracted light (110) and exhibit a pixel response that increases with increasing angle of incidence; (ii) bright-negative pixels (-) that receive another portion of the diffracted light (110) and exhibit a pixel response that decreases with increasing angle of incidence; and (iii) dark pixels (D) that receive substantially no diffracted light (110) and exhibit substantially no pixel response, the dark pixels (D) being interspersed among the bright-positive pixels (+) and the bright-negative pixels (-) to reduce pixel crosstalk within the image sensor (112); and
determining (206) depth information about the scene (104) based on differences between the pixel responses of the bright-positive (+) and bright-negative (-) pixels.

10. The method (200) of claim 9, wherein the TDM (108) partitions the plurality of pixels (128) according to a design rule specifying an overall pixel group distribution of 25% bright-positive pixels (+), 25% bright-negative pixels (-), and 50% dark pixels (D), and wherein the design rule for the overall pixel group distribution is enforced locally at a scale of four-pixel clusters.

11. The method (200) of claim 9, wherein the TDM (108) partitions the plurality of pixels (128) according to a design rule specifying that within any given 2×2 pixel cluster, there are two dark pixels (D) and two bright pixels of either the same or different polarities.

12. The method (200) of claim 11, wherein:

the TDM (108) comprises a grating axis (118) extending within a plane of incidence (124) in which the bright-positive (+) and bright-negative (-) pixels are sensitive to angle of incidence; and
the TDM (108) partitions the plurality of pixels (128) according to an additional design rule specifying:

(a) if the two dark pixels in the given 2×2 pixel cluster are aligned along a direction perpendicular to the grating axis (118), the two bright pixels within the given 2×2 pixel cluster are either both bright-positive (+) or both bright-negative (-); and
(b) if the two dark pixels in the given 2×2 pixel cluster are aligned along a direction not perpendicular to the grating axis (118), the two bright pixels within the given 2×2 pixel cluster consist of one bright-positive pixel (+) and one bright-negative pixel (-).

13. A transmissive diffraction mask (TDM) (108) for mitigating pixel crosstalk in depth imaging, comprising a grating structure configured to diffract light (102) received from a scene (104) by encoding angle-of-incidence information and directing the diffracted light (110) onto an image sensor (112) comprising a plurality of pixels (128), wherein the grating structure is further configured to spatially map the diffracted light (112) onto distinct pixel groups of the plurality of pixels (128), the distinct pixel groups comprising: (i) bright-positive pixels (+) onto which the TDM (108) is configured to direct a portion of the diffracted light (110), the bright-positive pixels (+) exhibiting a pixel response that increases with increasing angle of incidence; (ii) bright-negative pixels (-) onto which the TDM (108) is configured to direct another portion of the diffracted light (110), the bright-negative pixels (-) exhibiting a pixel response that decreases with increasing angle of incidence; and (iii) dark pixels (D) onto which the TDM (108) is configured to direct substantially no diffracted light (110), the dark pixels (D) exhibiting substantially no pixel response and being interspersed among the bright-positive pixels (+) and the bright-negative pixels (-) to reduce pixel crosstalk within the image sensor (112).

14. The TDM (108) of claim 13, wherein the grating structure is configured to partition the plurality of pixels (128) according to a design rule specifying an overall pixel group distribution of 25% bright-positive pixels (+), 25% bright-negative pixels (-), and 50% dark pixels (D), the design rule being enforced locally at a scale of four-pixel clusters.

15. The TDM (108) of claim 13, wherein the TDM (108) comprises a grating axis (118) extending within a plane of incidence (142) in which the bright-positive (+) and bright-negative (-) pixels are sensitive to angle of incidence, and wherein the grating structure is configured to partition the plurality of pixels (128) according to:

a first design rule specifying that within any given 2×2 pixel cluster, there are two dark pixels (D) and two bright pixels of either the same or different polarities; and
a second design rule specifying:

(a) if the two dark pixels (D) in the given 2×2 pixel cluster are aligned along a direction perpendicular to the grating axis (118), the two bright pixels within the given 2×2 pixel cluster are either both bright-positive (+) or both bright-negative (-); and
(b) if the two dark pixels (D) in the given 2×2 pixel cluster are aligned along a direction not perpendicular to the grating axis (118), the two bright pixels within the given 2×2 pixel cluster consist of one bright-positive pixel (+) and one bright-negative pixel (-).

FIG. 1

FIG. 2

EP 4 738 868 A1

FIG. 3A

FIG. 3B

FIG. 3C

FIG. 4

FIG. 5

FIG. 6

112

128₀  128₁  128₂  128₃

**FIG. 7**

FIG. 8

FIG. 9A

FIG. 9B

FIG. 9C

EP 4 738 868 A1

FIG. 9D

FIG. 9E

FIG. 9F

FIG. 10A

FIG. 10B

FIG. 10C

FIG. 10F

FIG. 10E

FIG. 10D

FIG. 11

EP 4 738 868 A1

FIG. 12A — 100, 128, 112

| 0.3 | 0.3 | 0.3 | 0.3 | 0.3 | 0.3 | 0.3 | 0.3 | 0.3 |
|---|---|---|---|---|---|---|---|---|
| 0.3 | 0.3 | 0.4 | 0.5 | 0.6 | 0.5 | 0.4 | 0.3 | 0.3 |
| 0.3 | 0.4 | 0.8 | 0.9 | 1.6 | 0.9 | 0.8 | 0.4 | 0.3 |
| 0.3 | 0.5 | 0.9 | 5.4 | 8.1 | 5.4 | 0.9 | 0.5 | 0.3 |
| 0.3 | 0.6 | 1.6 | 8.1 | 100 | 8.1 | 1.6 | 0.6 | 0.3 |
| 0.3 | 0.5 | 0.9 | 5.4 | 8.1 | 5.4 | 0.9 | 0.5 | 0.3 |
| 0.3 | 0.4 | 0.8 | 0.9 | 1.6 | 0.9 | 0.8 | 0.4 | 0.3 |
| 0.3 | 0.3 | 0.4 | 0.5 | 0.6 | 0.5 | 0.4 | 0.3 | 0.3 |
| 0.3 | 0.3 | 0.3 | 0.3 | 0.3 | 0.3 | 0.3 | 0.3 | 0.3 |

FIG. 12B — 100, 128, 112

| 0.3 | 0.3 | 0.3 | 0.3 | 0.3 | 0.3 | 0.3 | 0.3 | 0.3 |
|---|---|---|---|---|---|---|---|---|
| 0.3 | 0.3 | 0.4 | 0.5 | 0.6 | 0.5 | 0.4 | 0.3 | 0.3 |
| 0.3 | 0.4 | 0.8 | 0.9 | 1.6 | 0.9 | 0.8 | 0.4 | 0.3 |
| 0.3 | 0.5 | 0.9 | 5.4 | 8.1 | 5.4 | 0.9 | 0.5 | 0.3 |
| 0.3 | 0.6 | 1.6 | 8.1 | 100 | 8.1 | 1.6 | 0.6 | 0.3 |
| 0.3 | 0.5 | 0.9 | 5.4 | 8.1 | 5.4 | 0.9 | 0.5 | 0.3 |
| 0.3 | 0.4 | 0.8 | 0.9 | 1.6 | 0.9 | 0.8 | 0.4 | 0.3 |
| 0.3 | 0.3 | 0.4 | 0.5 | 0.6 | 0.5 | 0.4 | 0.3 | 0.3 |
| 0.3 | 0.3 | 0.3 | 0.3 | 0.3 | 0.3 | 0.3 | 0.3 | 0.3 |

FIG. 12D

FIG. 12C

FIG. 13A

FIG. 13D

FIG. 13G

EP 4 738 868 A1

FIG. 13B

FIG. 13H

FIG. 13E

EP 4 738 868 A1

FIG. 13C

FIG. 13F

FIG. 13I

EP 4 738 868 A1

FIG. 14A

FIG. 14B

FIG. 14C

FIG. 14D

200

Start

Diffracting light from a scene with a transmissive diffraction mask (TDM) to generate diffracted light with encoded angle-of-incidence information — 202

Detecting the diffracted light with an image sensor comprising a plurality of pixels, wherein the TDM is configured to map the diffracted light onto distinct pixel groups comprising bright-positive pixels, bright-negative pixels, and dark pixels interspersed among the bright-positive and bright-negative pixels to reduce pixel-to-pixel crosstalk — 204

Determining depth information about the scene based on differences between the pixel responses of the bright-positive and bright-negative pixels — 206

End

FIG. 15

Europäisches
Patentamt
European
Patent Office
Office européen
des brevets

# EUROPEAN SEARCH REPORT

**Application Number**

EP 25 21 1649

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2017/210781 A1 (AIRY3D INC [CA]) 14 December 2017 (2017-12-14) * paragraphs [0008] - [0019]; figures 1-7 * | 1-15 | INV. H04N23/95 H04N25/705 G02B5/18 G02B27/42 |
| A | US 10 015 471 B2 (AGRANOV GENNADIY [US]; CAO DONGQING [US] ET AL.) 3 July 2018 (2018-07-03) * paragraphs [0039] - [0041], [0058] - [0078]; figures 4A, 4B, 9A-9K * | 1-15 | |
| A | US 2021/321075 A1 (PANG LINYONG [US]) 14 October 2021 (2021-10-14) * figures 4, 11-15 * | 1-15 | |
| A | US 2012/193515 A1 (AGRANOV GENNADIY [US] ET AL) 2 August 2012 (2012-08-02) * figures 2B, 2C, 4, 6-8 * | 1-15 | |

**TECHNICAL FIELDS SEARCHED (IPC)**

H04N
G02B

The present search report has been drawn up for all claims

| Place of search | Date of completion of the search | Examiner |
|---|---|---|
| Munich | 9 February 2026 | Trimeche, Mejdi |

EPO FORM 1503 03.82 (P04C01)

## ANNEX TO THE EUROPEAN SEARCH REPORT
## ON EUROPEAN PATENT APPLICATION NO.

EP 25 21 1649

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2026

| Patent document cited in search report | | Publication date | Patent family member(s) | | Publication date |
|---|---|---|---|---|---|
| WO 2017210781 | A1 | 14-12-2017 | CA | 3026789 A1 | 14-12-2017 |
| | | | CN | 109716176 A | 03-05-2019 |
| | | | EP | 3466052 A1 | 10-04-2019 |
| | | | JP | 7120929 B2 | 17-08-2022 |
| | | | JP | 2019523910 A | 29-08-2019 |
| | | | KR | 20190020730 A | 04-03-2019 |
| | | | US | 2019257987 A1 | 22-08-2019 |
| | | | US | 2022057550 A1 | 24-02-2022 |
| | | | WO | 2017210781 A1 | 14-12-2017 |
| US 10015471 | B2 | 03-07-2018 | US | 2013038691 A1 | 14-02-2013 |
| | | | US | 2018288398 A1 | 04-10-2018 |
| US 2021321075 | A1 | 14-10-2021 | NONE | | |
| US 2012193515 | A1 | 02-08-2012 | US | 2012193515 A1 | 02-08-2012 |
| | | | US | 2014263980 A1 | 18-09-2014 |
| | | | US | 2016099273 A1 | 07-04-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CA 2017050686 W
- WO 2017210781 A
- CA 2018051554 W
- WO 2019109182 A
- CA 2020050760 W
- WO 2020243828 A
- CA 2021051635 W
- WO 2022104467 A
- CA 2022050018 W
- WO 2022150903 A

**Non-patent literature cited in the description**

- Depth from Defocus Using Angle Sensitive Pixels Based on a Transmissive Diffraction Mask. **NEETH KUNNATH**. Master's thesis. McGill University Libraries, 2018